(19) Europäisches Patentamt / European Patent Office / Office européen des brevets

(11) **EP 4 377 906 B1**

(12) **EUROPEAN PATENT SPECIFICATION**

(45) Date of publication and mention of the grant of the patent:
**06.05.2026 Bulletin 2026/19**

(21) Application number: **22760685.2**

(22) Date of filing: **29.07.2022**

(51) International Patent Classification (IPC):
**G06F 18/214** (2023.01)  **G06V 10/764** (2022.01)
**G06V 10/82** (2022.01)  **G06V 10/44** (2022.01)
**G06V 10/56** (2022.01)

(52) Cooperative Patent Classification (CPC):
**G06V 10/764; G06F 18/214; G06V 10/44; G06V 10/56; G06V 10/82;** G06V 2201/08

(86) International application number:
**PCT/EP2022/071406**

(87) International publication number:
**WO 2023/006974 (02.02.2023 Gazette 2023/05)**

(54) **OPTICAL FRAUD DETECTOR FOR AUTOMATED DETECTION OF FRAUD IN DIGITAL IMAGINARY-BASED AUTOMOBILE CLAIMS, AUTOMATED DAMAGE RECOGNITION, AND METHOD THEREOF**

OPTISCHER BETRUGSDETEKTOR ZUR AUTOMATISCHEN ERKENNUNG VON BETRUG IN DIGITALEN IMAGINÄREN AUTOMOBILANSPRÜCHEN, AUTOMATISIERTE SCHADENSERKENNUNG UND VERFAHREN DAFÜR

DÉTECTEUR DE FRAUDE OPTIQUE POUR DÉTECTION AUTOMATISÉE DE FRAUDE DANS DES DÉCLARATIONS D'ASSURANCE AUTOMOBILE IMAGINAIRES NUMÉRIQUES, RECONNAISSANCE AUTOMATISÉE DE DÉGATS, ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2021 CH 0701262021**

(43) Date of publication of application:
**05.06.2024 Bulletin 2024/23**

(73) Proprietor: **Swiss Reinsurance Company Ltd.**
**8022 Zürich (CH)**

(72) Inventors:
• **TISSEUR, Riccardo**
**14020 Aramengo (IT)**
• **ARORA, Amit**
**Princeton Junction New Jersey 08550us (US)**
• **GUPTA, Abhinav**
**Noida, Uttar Pradesh (IN)**

(74) Representative: **Leimgruber, Fabian Alfred Rupert**
**ThomannFischer**
**Wettsteinplatz 7**
**4005 Basel (CH)**

(56) References cited:
**US-A1- 2018 182 039    US-A1- 2020 364 802**
**US-A1- 2021 192 455**

• **PEI LI ET AL: "An Anti-fraud System for Car Insurance Claim Based on Visual Evidence", ARXIV.ORG, CORNELL UNIVERSITY LIBRARY, 201 OLIN LIBRARY CORNELL UNIVERSITY ITHACA, NY 14853, 30 April 2018 (2018-04-30), XP080874885**
• **KAMENICKY JAN ET AL: "PIZZARO: Forensic analysis and restoration of image and video data", FORENSIC SCIENCE INTERNATIONAL, ELSEVIER B.V, AMSTERDAM, NL, vol. 264, 28 April 2016 (2016-04-28), pages 153 - 166, XP029620775, ISSN: 0379-0738, DOI: 10.1016/ J.FORSCIINT.2016.04.027**

**Description**

*Field of the Invention*

The present invention relates to devices, systems, and methods for automated detecting and/or assessing damage to an object such as, for example, a vehicle, wherein possible fraudulent manipulations of digital image and/or fraudulent claims are automatically detected. Thus, it relates to an optical fraud detector and detection device for automated detection of fraud in digital imaginary-based automobile claim processing and automated damage recognition systems. In addition, it relates to devices, systems, and methods for detecting / analyzing / assessing damage to an object such as, for example, a vehicle providing estimates on repair / replacement costs, as well as, in addition to the evaluation on potential image manipulation and fraud. In particular, the present invention relates to a fully automated method for detecting and/or assessing damage to an object from image data provided by a user. Further, the present invention relates to a recognition apparatus and a recognition method based on image processing for automated damage identification for vehicle or property damages. Furthermore, the present invention also generally relates to image based damage recognition for processing damage claims by an insurance system.

*Background of the Invention*

*(A) Automated Automobile Claims Fraud Detector*

When insured property is damaged, the owner may file a claim with the risk-transfer system or insurance company concerned with the risk-transfer. However, conventional processing of insurance claims is a complex process including, inter alia, the involvement of experts such as accident assessors in order to inspect, analyze and assess any damage to the insured object and provide the amount of damage, as well as costs required to repair or replace the damaged object. Thus, there is a heavy reliance on manual inspections by an expert to provide a repair cost estimate, which may come with significant cost and delay in processing time, as a person (assessor) must view the asset in order to assess the damage and decide upon an outcome, e.g. view a vehicle, and decide if the vehicle is repairable or not. Further, an insured may want to know the full extent of the damage before involving the insurance or assessor in order to decide, whether it is worth submitting an insurance claim or more cost effective to simply pay the cost of repair themselves. For instance, is the damage panel repairable or does it need a replacement.

There has been some advancement across the industry over the last years in the use of images to assist with assessing vehicles or other property without the need of a physical inspection. However, these advancements still rely on the technical expertise required to first capture suitable images (e.g. required technical standard format) and then incorporate the images with additional data from third parties, to allow a trained assessor or engineer to manually inspect the images and generate, for example, a repair estimate report. This is a costly, time consuming process particularly when there are finite technical resources. In the prior art, there are also systems allowing a consumer to capture the images in accordance with given instructions and process the initial claim by providing detailed information of the damage (e.g. following a protocol of questions to determine the location, type, and description of the damage), making the process very time consuming and very subjective to the consumer's incentive.

First is to be noted, that fighting against insurance fraud is a challenging problem both technically and operationally. It is reported that approximately 21%-36% auto-insurance claims contain elements of suspected fraud but only less than 3% of the suspected fraud is prosecuted. Traditionally, insurance fraud detection relies heavily on auditing and expert inspection. Since manually detecting fraud cases is costly and inefficient and fraud need to be detected prior to the claim payment, data mining analytics is increasingly recognized as a key in fighting against fraud. This is due to the fact that data mining and machine learning techniques have the potential to detect suspicious cases in a timely manner, and therefore potentially significantly reduce economic losses, both to the insurers and policy holders. Indeed there is great demand for effective predictive methods which maximize the true positive detection rate, minimize the false positive rate, and are able to quickly identify new and emerging fraud schemes.

In summary, conventional insurance claims processing is a complex process that typically starts with a first notification of loss related to an insured item. Upon notification of loss, the claim may be routed to multiple claims adjusters that analyze different aspects of the damage associated with the insured item in order to determine whether compensation for the loss is appropriate. In general, conventional claims adjustment can involve paperwork processing, telephone calls, and potentially face-to-face meetings between claimant and adjuster. In addition, a significant amount of time can elapse between a first notice of loss from the claimant and the final settlement of the claim. In addition, while consumers may take advantage of conventional claims processing to determine if they will receive any compensation for loss associated with an item, consumers have traditionally had very few options for obtaining advice associated with loss prior to submission of an insurance claim. Moreover, traditional claims processing often requires multiple actors sharing numerous documents. Accordingly, there may be a need for efficient and fraud-robust claims processing to better serve customers.

Thus, there is a need to extend prior art systems to allow assessing damage to an object from any image data provided by a user and further allowing to automatically detect possible fraudulent image manipulations or fraudulent claims.

In general, automotive risk-transfer, i.e. automobile insurance, is a contract-based relation between a user and a risk-transfer-system, as a first-tier insurance system, that provides monetary-based protection against physical damage or bodily injury resulting from traffic collisions, a possibly occurring liability that could also arise from incidents in a vehicle, against theft of the automobile, damage to the vehicle sustained from events other than traffic collisions, such as weather or natural disasters, and/or damage sustained by colliding with stationary objects. In other words, the automobile risk-transfer protects the user against and mitigates the risk of monetary loss in the event of an accident or theft. If there is damage to the automobile due to accidents or thefts, the user can claim the automobile insurance to fix the damages in a service center. The process for claiming the automobile insurance is a long process. The user has to file the automobile insurance for damages to the automobile, provide evidence, wait for an insurance underwriter or an insurance verifier to inspect and report the automobile and the damages to the insurance firm. The risk-transfer underwriter or the insurance verifier is a professional contracted by the insurance firm assigned to gather information associated with an automobile incident. The insurance firm may then initiate an adjudication process to determine an amount that is to be paid to the user. The process is lengthy and time-consuming as it involves a requirement of physical verification by the insurance underwriter or an insurance verifier. It would sometimes take days to get the insurance underwriter or the insurance verifier to inspect the automobile.

With the world becoming increasingly digitized, some of the insurance claiming process has been implemented online. The insurance firms maintain portals in which the user can buy the automobile insurance, maintain and claim the automobile insurance online. The portals reduce the paperwork required and allow the user to claim the automobile insurance online. The user can provide input about the automobile incident, upload images of the automobile, and provide such information online. The insurance firm may process the input, the images, and information and perform the adjudication process. As a result, the time is significantly reduced for claiming process, making it easier for the user as well as the insurance firm to process information. However, with the process going online, claims leakage has also increased dramatically. One of the reasons for the increase in claims leakage is due to lack of ability to differentiate a real and tampered images. Also, with the ease of image editing tools in market, it has become easier for fraudulent to tamper the images with ease. The images are tampered to show non-existing damages, larger damages or pre-existing damages to claim insurance relief. It is difficult or impossible to identify such tampered images by a human. Claims leakage is defined as a difference between an actual claim payment made and an amount that should have been paid to a claimant if best industry practices were applied. Insurance firms are using visual inspection and validation methods to reduce such fraudulent acts. Also, with visual inspection and validation methods, time required to process the automobile insurance claims has also increased.

It is important to reduce the claims leakage while also reduce the time required to process the automobile insurance claims. To reduce the claims leakage is a technical challenge due to easily available image processing tools that enable high-quality image processing. It is difficult to identify a tampered images and differentiate them with a normal image. It requires a technical ability to analyze and/or process the images to identify fraudulent insurance claims.

There are existing systems that involve detecting image alteration using "EXIF" data (see WO2018/055340A1). This system performs detection of potential fraud based on utilizing specific information extracted from image data. Also, this existing system uses information received from suitable databases (i.e. Industry Fraud Databases, such as, but not limited to, the Insurance Fraud Register, the Motor Insurance Database, the DVLA, vehicle register or VIN check to check the history of a vehicle, checking the vehicles insurance claim history), and other useful information etc. However, the system relies on the databases to obtain information to determine fraudulent activities.

Another existing technology involves a method based on performing frequency-domain transforming on the acquired photo based on a two-dimensional discrete cosine transform function (see CN105405054A). Thereafter, according to a preset analysis rule and based on a color value of the photo subject to the frequency-domain transforming in each color channel, the method requires performing authenticity verification on the photo. If the acquired photo is real, identifying photographing time of the acquired photo; extracting claim event occurrence time filled in the claim application corresponding to the acquired photo. And when the extracted claim event occurrence time does not match with the identified photographing time, generating reminding information to remind that the fraudulent conduct exists in the claim application corresponding to the acquired photo. In other words, the 054' application performs authenticity verification using frequency domain color channel analysis and time stamp matching.

The above techniques require time and are challenging to implement. With advances in computing technologies such as Artificial Intelligence (AI), machine learning, and deep learning algorithms, one can use these advanced computing technologies for fraud detection. However, it requires a technical ability to understand various fraudulent practices, identifying appropriate technology to usage of aforementioned technologies and their application to prevent fraudulent claims.

## (B) Automated damage recognition

Methods for automated identification of damages at vehicles or other property subjects based on digital image processing are important for a fast and reliable assessment of the damage for processing damage repairs and any claims resulting from the damaging. In particular, digital image and/or optical sensory data based insurance processing has become an important area with large scope for automation, which can be applied to different fields of risk-transfer technology, as car insurance claim processing, property insurance claim processing, cyber insurance risk assessment etc. For example, when insured property, as e.g. a car or an estate etc., is damaged, the owner may file a claim with the insurance company. However, conventional processing of the risk-transfer claim is a complex process including, inter alia, the involvement of experts such as accident assessors in order to inspect, analyze and assess any damage to the insured object and provide the amount of damage, as well as costs required to repair or replace the damaged object. Thus, there is a heavy reliance on manual inspections by an expert to provide a repair cost estimate, which may come with significant cost and delay in processing time, as a person (assessor) must view the asset in order to assess the damage and decide upon an outcome, e.g. view a vehicle, and decide if the vehicle is repairable or not.

Furthermore, image and/or optical sensory data related to a vehicles or property damage can be of poor quality or completely overlook certain aspects of a damage. Known image processing techniques to determine damages can include information deficiencies and false damage classifications which may result in incorrect damage remedy measures. Image based digital claim processing is an important area with a large scope for automation, which can be applied to different fields of risk-transfer technology, as car insurance claim processing, property insurance claim processing, cyber insurance risk assessment etc.

Digital image processing is all about digital images and/or other optical sensory data, data processing structures enabling the technical handling and processing of the digital image data. Herein, digital images and digital image processing are distinguished. Compared to digital images, an analog image is a two-dimensional relation and structure of spatial plane coordinates x and y and an intensity at each point. When the spatial coordinates and the intensity at each point are finite discrete quantities, then the image is defined as a digital image. Digital image processing is the processing of digital images with a digital data processing system or computer. Each digital image is composed of a finite number of elements, each with a particular location, called pixels. Digital image processing is an important technical field for engineers and scientist who acquire, manipulate, measure, compare, restore, compress, analyze, and data mine images. One feature of a digital image is its scale invariance, i.e. an infrared image of a galaxy, a magnetic resonance imaging MRI image of the brain, an optical microscope image of cells, an electron microscope image of nuclear pores, and an atomic force microscopy image of gold atoms on a graphite substrate all differ in scale, but they all can be subjected to the techniques of digital image processing. Another feature is the ubiquitous technical nature of digital image processing. For example, in the field of microscopic or endoscopic imaging, e.g. acquired with MRI, ultrasound, x-ray, and positron emission tomography techniques can be subjected to image processing for enhancement, segmentation, measurement, and compression. The key point is that digital image processing can be applied to any digital image. This does not dependent on the scale of the image, nor on the type of instrument that is used to obtain the image. Digital images are acquired or measured by optical sensory devices, digitally processed, and displayed. The human eye and the visual system may enter the domain of digital image processing since visual perception can be an important component of the process as well as the subjective assessment of image displays.

It has again to be pointed out that image recognition techniques, such as facial recognition, image searches, and optical character recognition, are used in many areas of risk-transfer automation. Although image recognition modeling is very complicated, the process from image data to prediction result is often not very different from that of traditional statistical modeling. Image recognition models, inter alia, may rely on stacked traditional statistical modeling to approximate the complicated relationship between input data and output data that is unlikely to be represented by simple functions. Most methods of normalization and regularization used in image recognition are also used in traditional models. The technical tools available in the prior art for developing image recognition make the use of such models possible for actuaries with a background in statistics.

As discussed above, automated image recognition may be applied to the risk-transfer industry in many areas. It can be used to improve automation of customer services, such as using facial recognition for identity verification and faster underwriting and claim processing. With satellite images, precise and automated agricultural risk-transfer pricing and risk assessment can be achieved with crop, weather, and landscape information for areas as small as a few kilometers. Automated home risk-transfer pricing may be improved as well using traditionally difficult-to-capture images of the insured property such as the roof. Extreme risk events such as floods, hurricanes, tornadoes, and wildfires can be monitored and the impact on risk-transfer claims updated in real time with the aid of automated image recognition. Medical images can provide richer information for health insurance underwriting and pricing. Optical character recognition can help digitize documents and facilitate information saving, searching, and sharing. There is no doubt about the advantages of using image recognition techniques in the long run. However, a few factors need to be considered. The amount of available data typically needs to be big, and the cost of data collection needs to be reasonable. The accuracy level of the applied modeling should be acceptably high, and the adverse impact of a wrong prediction should be manageable. The improvement of decision making needs to have sufficient financial benefits to offset the large investment in the techniques. As with the adoption of any new technology, it is a cost-benefit analysis to consider the investment of resources versus the gain from the application.

For automated risk-transfer, technical challenges also exist for a successful application of automated image recognition. Existing modeling techniques are usually trained to identify the objects in an image, but for risk-transfer applications, sometime useful information may be related the behavior of the object. This can lead to more customized model training using relevant image data. Data collection and model training may take a long time and require many resources. The current accuracy level of most advanced modeling techniques in the prior art is between 70% and 90%. However, in the field of risk-transfer, small error could lead to customer complaints and potential reputational risk. Cyber risk may also increase when automated image recognition techniques are used. For example, if facial recognition is used to confirm identification, the program may be hacked so that it accepts illegal requests and allows illegal access to private data.

In summary, there is a need for further technical developments to improve the applied modeling process accuracy, so the modeling processes become sophisticated enough to improve users' analysis and decision making. At the same time, image recognition provides many opportunities for actuaries. Equipped with both the industry knowledge and the technical skills, actuaries can help link image recognition with risk assessment and decision making in a meaningful way. They can help design image recognition model structures that can solve more complicated risk-transfer-related issues and help validate image recognition conclusions using existing models based on alternative data sources.

The publication "Automatic Car Insurance Claims Using Deep Learning Techniques" by Singh R. et al. discloses an end to end system to automate car insurance claim processing. The system takes images of the damaged car as input and gives relevant information like the damaged parts and provides an estimate of the extent of damage (no damage, mild or severe) to each part. This serves as a cue to then estimate the cost of repair which can be used in deciding insurance claim amount. The publication "Car Damage Detection and Classification" by Kyu P.M. discloses an image-based car insurance processing system applying multiple learning-based algorithms for car damage detection and assessment in real-world datasets. The algorithms detect the damaged part of a car and assess its location and then its severity. The system also uses domain-specific pre-trained CNN models, which are trained on an ImageNet dataset, and followed by fine-tuning, because some of the categories can be fine-granular to get specific tasks.

However, these systems rely on the quality of the original datasets and therefore the identification of damages using these datasets include deficiencies and inaccuracies related to the data used for the damage detection.

In the field of cyber security detection technology, such as anomaly detection for fraud recognition, it is known to use ensemble methods of combining learning algorithms. For example, the prior art document US 11,005,872 B2 discloses a system providing for anomaly detection in cyber threats and fraud. The system captures records, each record having a corresponding number of attributes. It determines frequency measure for categorical attributes tags in the training portion of the plurality of records combining deep learning algorithms which is then used for probabilistic classifier in anomaly detection.

The prior art document US 2018/0182039 A1 discloses an automated method comprising the steps of (i) classifying damage assessing images of a same vehicle portion into one same image set, (ii) obtaining key point features of each image set, (iii) diving every two damage assessing images in each image set into one image group, (iv) matching multiple relevant key points from the damage assessing images in each image group, (v) calculating a feature point transform matrix of each image, and (vi) converting one of the two damage assessing images in each image group to a to-be-verified image which has the same shooting angle as the other damage assessing image in the image group, (vii) matching feature parameters of the to-be-verified image with those of the other damage assessing image in the same image group, and (viii) generating reminder information, when there are unmatched parameters, to remind the user of frauds of the damage assessing images received from the terminal. Further, the document US 2021/0192455 A1 discloses an automated method for submitting an insurance claim for damaged motor vehicle glass, the method comprising the steps of (i) receiving a plurality of images associated with motor vehicle glass at processing circuitry, (ii) performing image processing operations on each of the plurality of images to determine one or more of glass damage, glass type, and/or claim fraud, (iii) and submitting an insurance claim for motor vehicle glass repair or replace based on the glass type or damage, or flagging the claim as fraud. The document "An Anti-fraud System for Car Insurance Claim Based on Visual Evidence" of Pei Li et al. discloses a machine learning based system for express processing of vehicle insurance claim and settlement by allowing customers uploading pictures taken by mobile devices. The system provides an anti-fraud checking before processing a claim. The system is able to create a first data set of car damage images collected from internet and local parking lots. In addition, the system is able to generate robust deep features by locating the damages accurately and efficiently in the images. The state-of-the-art real-time object detector YOLO is modified to train and discover damage region as an important part of the pipeline. Both local and global deep features are extracted using VGG model, which are fused later for more robust system performance. The prior art document US 2020/0364802 A1 discloses an automated system for recognition of vehicle damage. The system automatically recognizing, on a terminal, whether a vehicle damage is old damage, recognizing in real-time whether a damage is an old damage in photoing or videoing without human intervention, lower the requirement for expertise of the surveyors. Corresponding information is transmitted to a risk-transfer system, making it impossible to conceal the fact that the damage has been recognized as old damage even if a surveyor or a malicious user deletes the photograph or video of the old damage. This may reduce the risk of fraud, improve the reliability of damage recog-nition, improve the reliability of damage evaluation. Finally, the prior art document "PIZZARO: Forensic analysis and restoration of image and video data" by Jan Kamenicky et al. discloses an automated system for image and video forensic analysis. The system helps to assess image and video credibility and origin and to restore and increase image quality by diminishing unwanted blur, noise, and other possible artifacts. The system uses LCD recapture detection and denoising approaches implemented in the known PIZZARO software tool, which consists of the image processing functionality as well as of reporting and archiving functions to ensure the repeatability of image analysis procedures and thus fulfills formal aspects of the image/video analysis work.

## Summary of the Invention

It is one object of the present invention to provide an o provide a fully automatic fraud detector adapted to assess damage to an object from any image data provided by a user and detect possible fraudulent image manipulations or fraudulent claims.

It is a further object of the present invention to provide an apparatus or system, and method for automated damage identification and/or recognition for vehicle or property damages, which does not have the aforementioned drawbacks. In particular, it is meant to be possible to provide an apparatus and method for automated damage identification for vehicle or property damages that provides a high level of reliability and accuracy of the provided damage information, is overcomes deficiencies of damage data used for the damage identification and provides fast and reproducible damage information suitable for damage claim processing. More particularly, the automated car damage detection should be able to assess the claim process for faster processing with an advanced level of accuracy. The invention should be able to apply AI in claims processing providing model structures which can be well-trained with annotated damaged cars also based on a large amount and variety of training data sets. This is to detect the level of damage for accurate automated claim data processing.

According to the present invention, these objects are achieved, particularly, with the features of the independent claims. In addition, further advantageous embodiments can be derived from the dependent claims and the related descriptions.

## (A) Automated fraud detection

According to the present invention, the above-mentioned objects for an automated automobile claims fraud detector are achieved in that for automatically evaluating validity and extent of at least one damaged object from image data, characterized by the processing steps of: (a) receive connected car sensor data, and/or floating cellular data from mobile devices, and/or installed on-board unit devices (OBD devices) data; (b) process this data to predict/determine damage location zones and incident location/date/time, and other parameters; (c) receive image data comprising one or more images of at least one damaged object; (d) process said one or more images for existing image alteration using unusual pattern identification and providing a first fraud detection; (e) process said one or more images for fraud detection using RGB image input, wherein the RGB values are used for (i) CNN-based pre-existing damage detection, (ii) parallel CNN-based color matching, and (iii) double JPEG compression (DJCD) detection using custom CNN; (f) process output of (i) CNN-based pre-existing damage detection, (ii) parallel CNN-based color matching, and (iii) double JPEG compression detection using custom CNN as input for ML-based fraud identifier providing a second fraud detection; (g) study/combine all the above steps; and (h) generate fraud signaling output, if the first or second fraud detection indicates fraud. To realize the system, one or more data processing systems and/or computers can be configured to perform particular operations or actions by virtue of having software, firmware, hardware, or a combination of them installed on the system that in operation causes or cause the system to perform the actions. One or more executable codes can be configured to perform particular operations or actions by virtue of including executable instructions that, when executed by data processing apparatus, cause the apparatus to perform the actions. In one aspect, a system for detecting fraud in an automobile insurance claim is disclosed. The system includes one or more servers configured to: obtain the automobile insurance claim, the automobile insurance claim may include text data, one or more images associated with the automobile damage, and automobile and mobile sensor data, characterized in that the one or more servers configured to process the text data, the one or more images, and the automobile and mobile sensor data to determine an unusual damage pattern and an indication of fraud; and determine a fraud in the automobile insurance claim based on the unusual damage pattern and the fraud identifier. The unusual damage pattern is damage to the automobile that is unlikely to have happened to the automobile due to an accident. The indication of fraud is an indication that the one or more images are tampered.

In an embodiment variant, the generated fraud signaling output is verified, in a feedback-loop, by a human expert, wherein the verified signaling output is used for updating ML parameters of the CNN-based pre-existing damage detection and/or of the parallel CNN-based color matching and/or of the double JPEG compression detection using custom CNN.

In another embodiment variant, the disclosed method for automated detecting fraud in an automobile risk-transfer claim is disclosed can e.g. further comprise obtaining the automobile risk-transfer claim, the automobile risk-transfer claim comprising text data, one or more digital images associated with the automobile damage, and automobile and mobile sensor data. The method can e.g. comprise processing the text data, the one or more digital images, and the automobile and mobile sensor data to determine an unusual damage pattern and an indication of fraud and determining a fraud in the automobile risk-transfer claim based at least one of the unusual damage pattern and the indication of fraud. The unusual damage pattern is a damage to the automobile that is unlikely to have happened to the automobile due to an accident. The indication of fraud is an indication that the one or more digital images are tampered with. Other embodiments can e.g. comprise associated computer systems, apparatus, and computer program codes recorded on one or more computer storage devices, each configured to perform the actions of the methods.

Other embodiment variants and advantages of the inventive system and/or method will become apparent from the following detailed description, taken in conjunction with the accompanying drawings, which illustrate by way of example the teachings of the disclosure, and are not restrictive.

### (B) Automated damage recognition and classification

Regarding the automated damage recognition, the present invention achieves this aim by providing a computer-vision based ensemble modelling data processing structure which provides a new technical approach to claim image processing by combining visual intelligence achieved via multiple computer vision models into a single domain, thereby improving the recognition of damage part and type classification, that either of the input, disparate computer vision models could have achieved. The inventive ensemble model structure utilizes a novel processing pipeline by amalgamating outputs of multiple visual models, and thus reducing individual model deficiencies and enhancing inference accuracy of each modelling structure. Preferably, the invention applies ensembled visual intelligence modelling to augment the data utilization. As a result, the proposed ensemble model structure achieves higher accuracy in detecting damaged parts and corresponding damage types on vehicles and property that is particularly useful for damage claim processing. As another advantage, the present invention can be based on training data for AI having precisely annotated images of different types of damaged vehicles which helps the present invention to train the machine learning structures more efficient.

In particular, these aims are achieved by an automated recognition system and method for automated damage recognition, identification and/or classification for vehicle or property damages based on image processing, wherein one or more images captured of one or more damage at a vehicle or property provide digital image data that is uploaded into the at least one data storage unit. In an image processing step the image data is processed by independently applying at least two different visual models to the image data to independently identify damaged parts of the vehicle or property and/or damage types at the vehicle or property, and wherein each visual model provides an independent subset of damage data corresponding to the identified damaged parts and/or damage types. In a combining step the subsets of damage data are automatically combined to define a single domain of damage data that provides enhanced inference accuracy for identifying damaged parts of the vehicle or property and/or damage types. Finally, damage information based on the single domain of damage data is provided that indicates damaged parts and/or damage types.

The single domain of damage data includes all data about damage parts and types identified by the at least two visual models. Preferably, the damage data of each subset is compared and data missing in one subset but present in another subset is included in the single domain of damage data. Further, the subsets of damage data are revised and for an identified damage only the damage data of higher quality is included into the single domain of damage data. Thus, the damage information gained from the damage recognition method according to the invention is completer and more reliable, and the inference accuracy can be improved.

In one alternative embodiment of the automated recognition system and method, in the image processing step the image data is prepared for the processing by the at least two different visual models in that the image data is provided with information about a damage case identifier, a damage part number and/or an image identifier. In the combining step these information can be compared, and the data can be allocated to a specific damage.

In a further alternative embodiment of the automated recognition system and method, the image processing step of at least one of the visual models provides steps of damage part identification, damage classification identification and/or assigning a damage confidence metric to the damage data. The step of damage part identification can for example be executed by e.g. realized by applying one or more supervised learning structures having during the learning phase recognized and classified damage parts, or the like. The step of damage class identification can for example be executed by applying a supervised learning structure with classified damage parts as input during learning phase or by applying an unsupervised machine-learning structure for the clustering by afterwards classifying the clusters by a feedback loop to a human expert or by using a supervised learning structure as above.

In still a further alternative embodiment of the automated recognition system and method, the image processing step of at least one of the visual models may provide steps of data cleaning and/or data correction including correction of the damage part identification and/or damage classification. For the present invention, prior art cleaning and correcting structure can be e.g. applied. However, in the context of the present invention, a new data cleaning technique for the effective removal of dirty data is introduced and can be used with the inventive system. This process involves the following two steps: (i) dirty data detection and (ii) dirty data cleaning. The dirty data detection process has been assigned with the following process namely, data normalization, hashing, clustering, and finding the suspected data. In the clustering process, the optimal selection of centroid is the promising one and is carried out by employing the optimization concept. After the finishing of dirty data prediction, the subsequent process: dirty data cleaning begins to activate. The cleaning process also assigns with some processes namely, the leveling process, Huffman coding, and cleaning the suspected data. The cleaning of suspected data is performed based on the optimization concept. Hence, for solving all optimization problems, a hybridized strucutre is proposed, called Firefly Update Enabled Rider Optimization Algorithm (FU-ROA), which is the hybridization of the Rider Optimization Algorithm (ROA) and Firefly (FF) algorithm. To the end, the analysis of the performance of the implanted data cleaning method is scrutinized over the other traditional methods like Particle Swarm Optimization (PSO), FF, Grey Wolf Optimizer (GWO), and ROA in terms of their positive and negative measures. From the result, it can be observed that the performance of the proposed FU-ROA model is improved over the existent PSO, FF, GWO, and ROA modelling structures, respectively.

In another alternative embodiment of the automated recognition system and method, at least one of the visual models provides steps of associating the damage data with a predefined damage nomenclature and/or predefined damage classification, wherein the predefined damage nomenclature and/or classification is selected from a master list of damage nomenclature. Preferably this step is executed during the image processing step and the assigned nomenclature and classification can be included in the single domain of damage data. The damage nomenclature and the damage classification can for example be defined by different damage claim categories, most common types of damages at vehicles or properties, inventory lists of vehicles or properties or other known features defining the vehicles, the properties, or the damage. This damage associating step is preferably executed during the image processing step and the assigned predefined damage nomenclature and/or predefined damage classification can be used in the combining step.

In one embodiment of the automated recognition system and method, in the combining step the single domain of damage data is processed by a gradient boosted decision tree model using at least two self-contained gradient boosted classifier models giving weighted damage data and amalgamating the weighted damage data to provide damage information as ensemble model output. As known, boosting is the process of converting weak learners into strong learners within machine-learning structures. Each new tree is a fit on a modified version of the original data set. The gradient boosting structure (gbm) processes data similar to an AdaBoost ML-structure. The process begins by training the decision tree in which each observation is assigned an equal weight. After evaluating the first tree, the weights of those observations are increased that are difficult to classify and lower the weights for those that are easy to classify. The second tree is therefore grown on this weighted data. The idea is to improve upon the predictions of the first tree. The system then determines the classification error from this second tree ensemble model and grow a third tree to predict the revised residuals. This process is repeated for a specified number of iterations. Subsequent trees help to classify observations that are not well classified by the previous trees. Predictions of the final ensemble model is therefore the weighted sum of the predictions made by the previous tree models. In the herein used Gradient Boosting, many models can e.g. be trained in a gradual, additive and sequential manner. The major difference is how the ML-structure identify the shortcomings of weak learners (e.g. decision trees). The herein proposed gradient boosting identifies the shortcomings by using gradients in the loss function (y=ax+b+e, e needs a special mention as it is the error term). The loss function is a measure indicating how good are model's coefficients are at fitting the underlying data.

In a further embodiment of the automated recognition system and method, the single domain of damage data and/or the ensemble model output are subject to human expert validation and a validation factor corresponding to the expert validation is fed into the combining step. This provides a machine learning loop based on human expert validation and correction feedback and the improved method can be applied to the subsets of damage data. The automated recognition system and method according to the present invention can for example use visual intelligence models for the at least two visual models used in the image processing step.

Furthermore, above defined aims are achieved by a recognition apparatus or system for automated damage identification for vehicle or property damages based on image processing, comprising a damage data upload section, at least one data storage unit, an image processing section, a damage identification section, and a damage information output section. The upload section is designed to receive one or more images captured of a damage of a vehicle or property in form of image data that is uploaded into the at least one data storage unit. The image processing section is designed to process the image data in an image processing step by independently applying at least two different visual models to the image data to independently identify damaged parts of the vehicle or property and/or damage types at the vehicle or property, wherein each visual model provides an independent subset of damage data corresponding to the identified damaged parts and/or damage types. The damage identification section is designed for automatically combining the subsets of damage data in a combining step to define a single domain of damage data that provides enhanced inference accuracy for identifying damaged parts of the vehicle or property and/or damage types. Finally, the damage identification output section is designed to provide damage information based on the single domain of damage data.

The recognition apparatus is particularly designed to utilize the recognition method according to the present invention as described above.

In one alternative embodiment the recognition apparatus comprises a comparison section, which is designed to check the individual subsets of damage data are for data deficiencies regarding the damaged parts of the vehicle or property in the combining step. Further, such data deficiencies in one subsets of damage data may be compensated by damage data of another subset of damage data to provide enhanced inference accuracy of the single domain of damage data. The data deficiencies in the damage data may be represented by data gaps, incorrect data assemblies, defective data chains and the like, which result in vague damage identification and insufficient damage information. Such unclear damage identification can be dispelled by using damage data from another subset of damage data.

In a further alternative embodiment of the recognition apparatus a data storage unit provides a master list of damage nomenclature and the single domain of damage data representing the identified damaged parts and/or damage types is compared to the master list of damage nomenclature to associate the identified damage to corresponding damage nomenclature.

In still a further alternative embodiment of the recognition apparatus the image data is further processed by a gradient boosted decision tree model as mentioned above.

In yet a further alternative embodiment the recognition apparatus is designed in that the damage information is subject to human expert validation and the combining step is augmented by a validation factor corresponding to the expert validation as described above.

In summary, the automated recognition system or apparatus and method according to the present invention in a first data preparation/preprocessing cycle loads captured images and processes the images by applying different visual models, particularly by applying visual intelligence models. Preferably, the recognized damaged parts and types are combined into a common nomenclature using a corresponding master list.

In a preferred embodiment, the system and method processes the images further in a second data processing cycle using a gradient boosted decision tree model structure. In a further embodiment variant, the single domain of damage data or the ensemble model output is used to improve the machine learning of the method based on a human expert validation/correction feedback loop.

The present recognition method and system or apparatus provide, inter alia, a technically new way of automated damage identification and damage classification that provides refined damage analysis, improves, and accelerates claim processing, and enhances damage remedy.

It should be again stated that the present invention relates not only to the inventive method and the inventive apparatus, but also to a system for carrying out this method and a corresponding computer program product.

### *Brief Description* of *the Drawings*

The present invention will be explained in more detail below relying on examples and with reference to these drawings in which:

Figures 1 to 9 related to the inventive automated fraud detection, whereas figures 10 to 17 related to the inventive automated damage recognition

Figure 1 shows a block diagram, schematically illustrating an exemplary architecture of a system for detecting fraud in an automobile insurance claim, according to some embodiments.

Figure 2 shows a block diagram, schematically illustrating exemplary zones of a car, according to some embodiments, i.e. an exemplary car damage zones reference diagram.

Figure 3 shows a flow diagram, schematically illustrating an exemplary process for determining fraud in the automobile insurance claim, according to some embodiments.

Figure 4 shows a flow diagram, schematically illustrating an exemplary determination of an unusual damage pattern, according to some embodiments.

Figure 5 shows a block diagram, schematically illustrating an exemplary determination of an indication of the fraud, according to some embodiments.

Figure 6 shows a block diagram, schematically illustrating an exemplary process flow for detecting a fraud in the automobile insurance claim, according to some embodiments.

Figure 7 shows a block diagram, schematically illustrating an exemplary embodiment variant of the inventive automobile claims fraud detector detecting fraudulent claim requests inputted by an insured individual over a claim portal of an insurer, where the insured uploads digital images of damages to an insured vehicle and the automobile claims fraud detector detects manipulated or fraudulent images being part of the claim request, and where loss cover is denied if fraud is detected.

Figure 8 shows a block diagram, schematically illustrating an exemplary overview of the inventive automobile claims fraud detector.

Figure 8b shows a block diagram schematically illustrating an exemplary unusual pattern identification using business rules, in figure 1 referred as figure 1b.

Figure 8d shows a block diagram schematically illustrating an exemplary unusual pattern identification using business rules, in figure 1 referred as figure 1d.

Figure 9 shows a block diagram of another embodiment variant, schematically illustrating an exemplary overview of a different variant of the inventive automobile claims fraud detector.

Figure 10 shows a block diagram which schematically illustrates a first cycle of an exemplary processing flow of a recognition method according to the present invention, and

Figure 11 shows a block diagram which schematically illustrates a second cycle of the exemplary processing flow of the recognition method according to Figure 10.

Figure 12 shows a block diagram which schematically illustrates an automated annotation for vehicle dent detection performed by the inventive automated recognition system.

Figure 13 shows a block diagram which schematically illustrates an automated annotation for damage level detection performed by the inventive automated recognition system.

Figure 14 shows a block diagram which schematically illustrates an automated annotation for damaged car body parts performed by the inventive automated recognition system.

Figure 15 shows a block diagram which schematically illustrates an automated bounding of identified boxes for car damage detection performed by the inventive automated recognition system.

Figure 16 shows a block diagram which schematically illustrates an automated semantic segmentation for car damage detection performed by the inventive automated recognition system.

Figure 17 shows a block diagram which schematically illustrates an automated severity weighting for car damage detection performed by the inventive automated recognition system.

### Detailed Description of the Preferred Embodiments

#### (A) Automated fraud detection

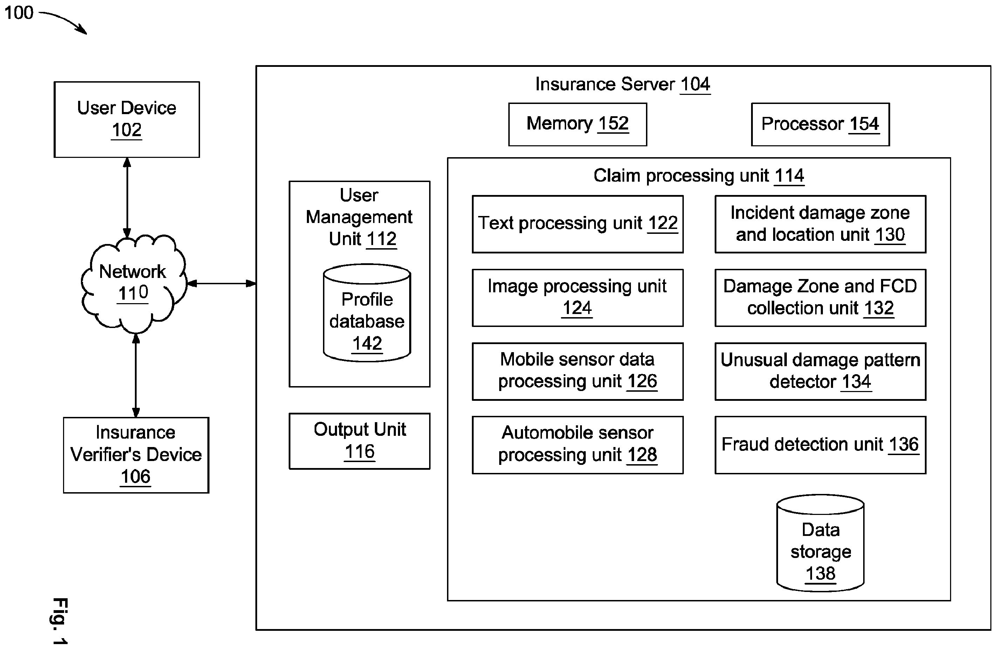

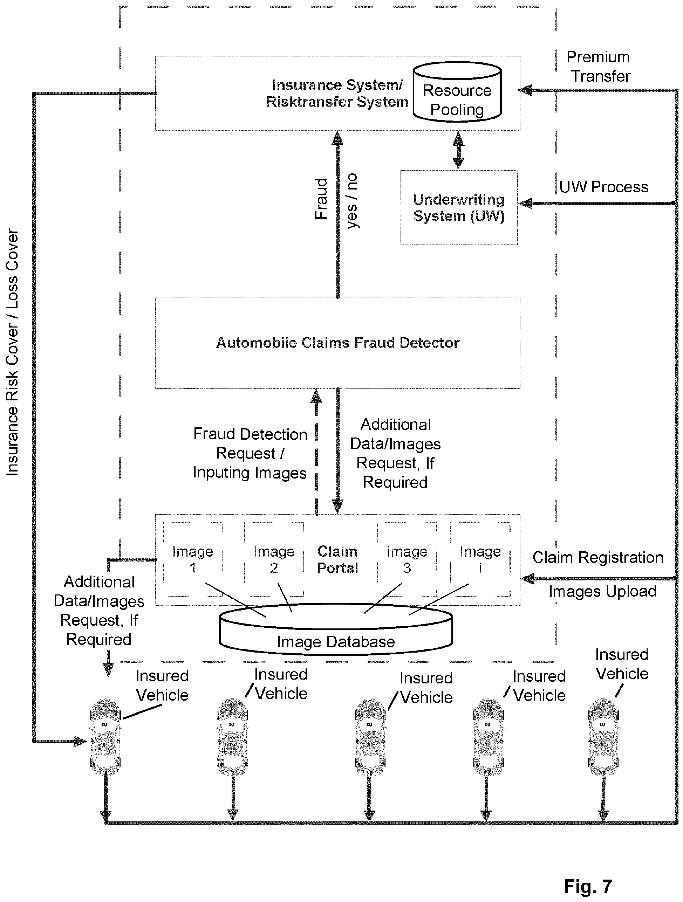

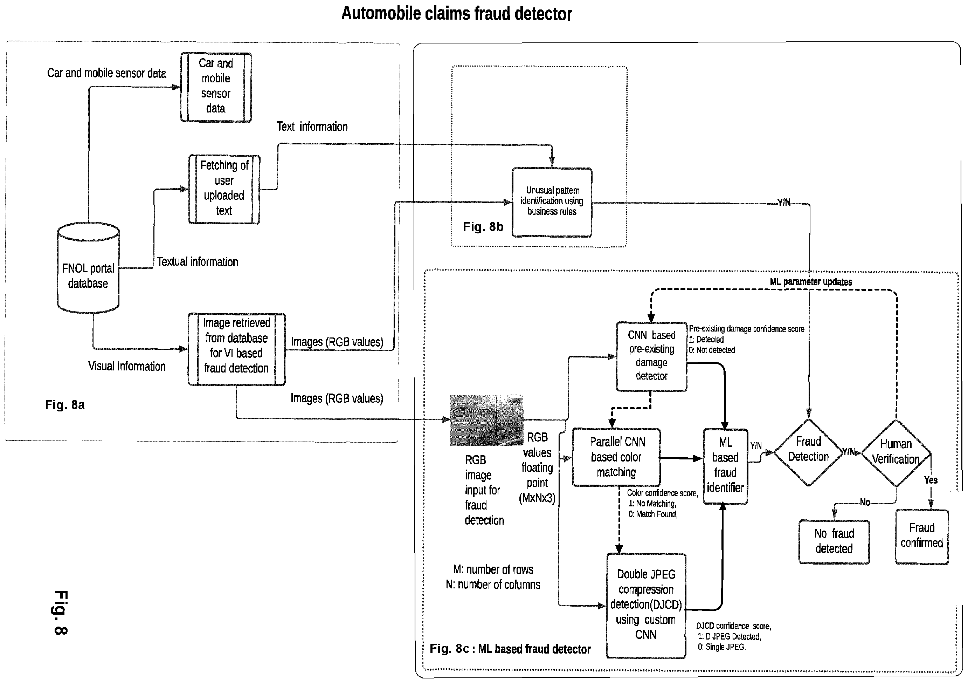

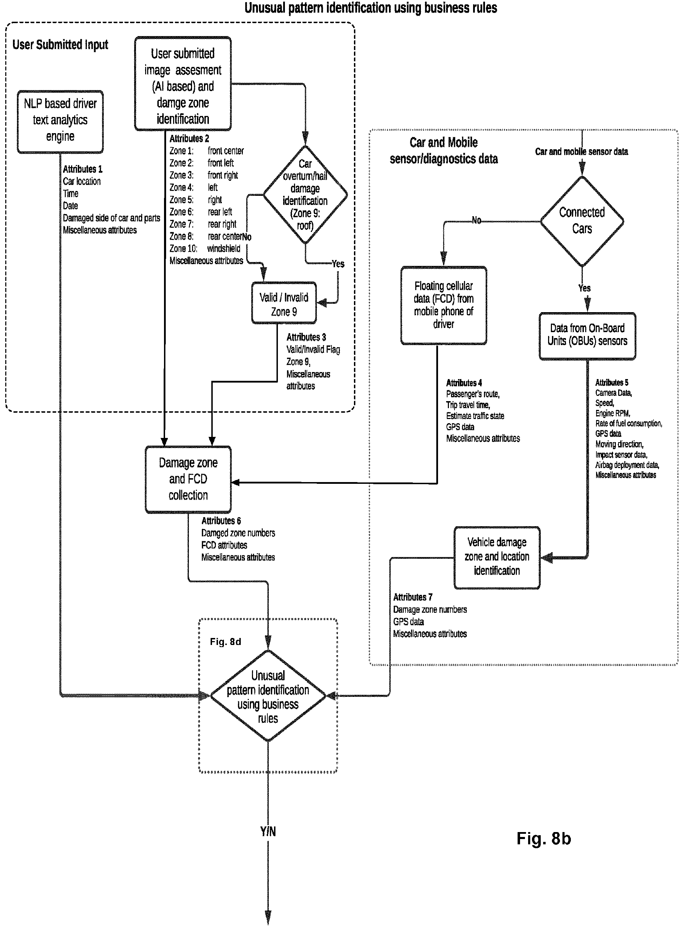

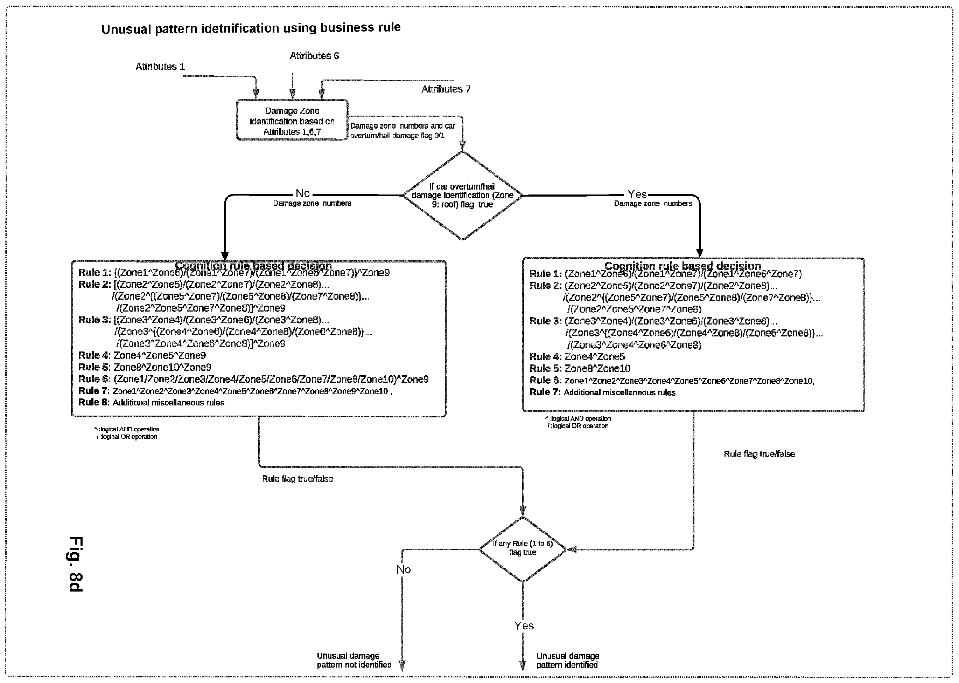

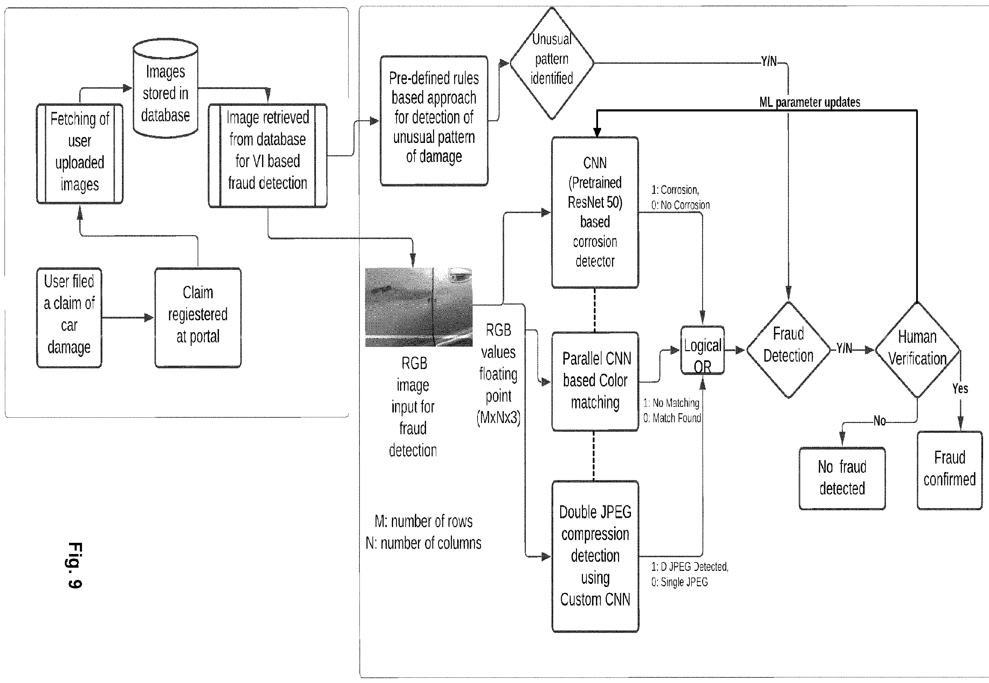

Figures 1 to 9 schematically illustrate an architecture for an automated automobile claims fraud detector according to the invention. The automobile claims fraud detector provides automated evaluation of validity and extent of at least one damaged object from image data, the automobile claims fraud detector comprising the processing steps of: (a) receive image data comprising one or more images of at least one damaged object; (b) process said one or more images for existing image alteration using unusual pattern identification and providing a first fraud detection; ( c) process said one or more images for fraud detection using RGB image input, wherein the RGB values are used for (i) CNN-based (Convolutional Neural Network) pre-existing damage detection, (ii) parallel CNN-based color matching, and (iii) double JPEG compression (DJCD) detection using custom CNN; (d) process output of (i) CNN-based pre-existing damage detection, (ii) parallel CNN-based color matching, and (iii) double JPEG compression detection using custom CNN as input for ML-based fraud identifier providing a second fraud detection; and (e) generate fraud signaling output, if the first or second fraud detection indicates fraud. The generated fraud signaling output can e.g. be verified by a human expert, wherein the verified signaling output is used for updating ML parameters of the CNN-based pre-existing damage detection and/or of the parallel CNN-based color matching and/or of the double JPEG compression detection using custom CNN.

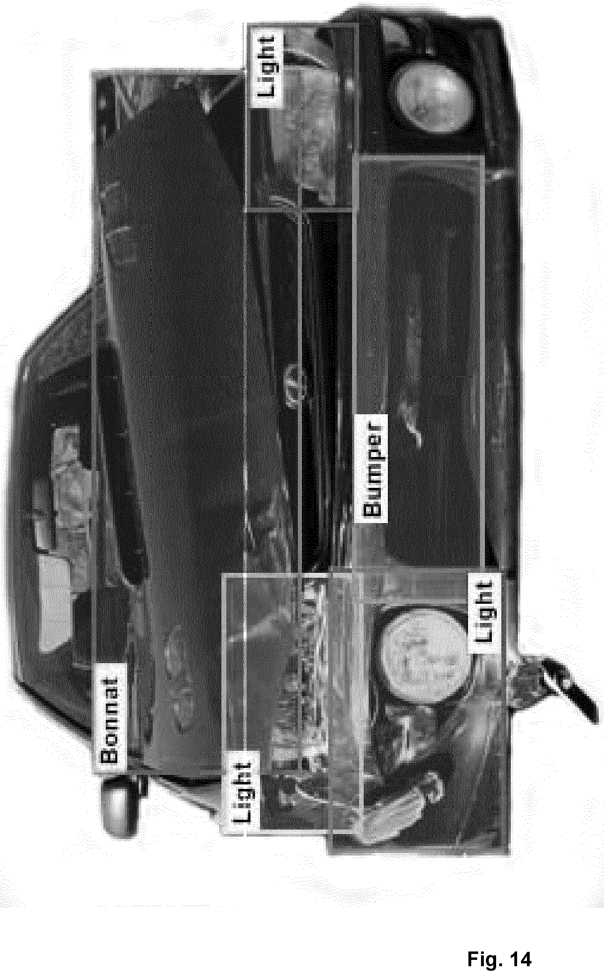

In accordance with various aspects of the disclosure (c.f. figure 14), methods and risk-transfer systems are disclosed through which risk-transfer and/or risk-transfer and/or claims may be automatically settled through an automated process. In certain aspects, when a claims processing server (as e.g. a claim portal of an insurer) receives data regarding an insured item ( e.g., a vehicle, etc.) from a computing device (e.g., a mobile device, as a smart phone or a PC), the server processes the data and manages settlement of a claim request associated with the insured item. The automated system may utilize various hardware components ( e.g., processors, communication servers, memory devices, sensors, etc.) and related computer algorithms to process image data related to damage associated with an insured item, determine if the image data conforms to a pre-determined set of criteria, analyze the image data to assess loss associated with the insured item, and determine if a payment is appropriate to the claimant as compensation for assessed loss. In particular, the automated automobile claims fraud detector automatically detects fraudulent manipulations of uploaded damage images, or other fraudulent claim requests associated with transmitted or uploaded digital damage images of an insured vehicle.

The claims processing server or claim portal may comprise a processor for controlling overall operation of the claims processing server and its associated components, including RAM, ROM, input/output module, and memory. I/O-device may include a microphone, keypad, touch screen, and/or stylus through which a user of enhanced claims processing server may provide input and may also include one or more of a speaker for providing audio output and a video display device for providing textual, audiovisual, and/or graphical output. Software may be stored within memory to provide instructions to the processor(s) for enabling the system to perform various functions. For example, memory may store software used by the system, such as an operating system, application programs, and an associated databases. Processor and its associated components may allow the system to run a series of computer-readable instructions to analyze image data depicting damage to an insured item ( e.g., vehicle, etc.). Processor may determine the general location of damage associated with the vehicle by analyzing the uploaded images of the vehicle and, for example, further comparing these images with reference images of a similar vehicle with no damage or with similar damage. In addition, processor may assess the loss associated with the damaged vehicle and transmit terms for settling a risk-transfer claim related to the loss to a respective user's mobile device. The server may operate in a networked environment supporting connections to one or more remote clients, such as terminals, PC clients and/or mobile clients of mobile devices. The server can further comprise data stores for storing image data of insured items that have been analyzed by the claims processing server in the past. In particular, the terminals may represent mobile devices with built-in cameras for capturing image data associated with a damaged item.

Appropriate network connections can e.g. include a local area network (LAN) and a wide area network (WAN) but may also include other networks. When used in a LAN networking environment, the server can be connected to the LAN through a network interface. When used in a WAN networking environment, the server includes means for establishing communications over the WAN, such as the Internet. The existence of any of various well-known protocols such as TCP/IP, Ethernet, FTP, HTTP, and the like is presumed. Additionally, an application program used by the claims processing server according to an embodiment of the disclosure may include computer executable instructions for invoking functionality related to calculating an appropriate payment for assessed damage associated with an insured item. The claims processing server and/or terminals may also be mobile devices, as e.g. smart phones, including various other components, such as a battery, speaker, camera, and antennas.

The use of the risk-transfer server with the claim portal and the fraud detector may aid in cutting down time between a first notice of loss and settlement of the claim over the claim portal (e.g., real-time settlement of a claim) associated with the loss (e.g., via a payment and/or information regarding repair/replacement of an insured item). In addition, because the system discussed herein are automated and allow claims adjusters to inspect damages remotely or reduce the involvement of claims adjusters, less time and money may be spent to transport these adjusters to inspection locations. The automated nature of this process may also create the opportunity for remote human inspections of damage associated with insured items.

In particular, figure 1 depicts an architecture of a system 100 for automatedly detecting a fraud in an automobile insurance claim, according to some embodiment variants. According to the embodiment variant, the automated system 100 may include a user device / network-enabled client 102, an automated risk-transfer system resp. automated insurance system 104, a verifier's device 106, and a data transmission network 110, enabling digital communication between the system components for data exchange and transmission, in particular between an electronic claim-portal of the automated risk-transfer system 104 acting as a server device and the network enabled client device of the user accessing the claim portal via the data transmission network 110. In an embodiment variant, the user device 102 may be a device associated with a user who is filing an automobile insurance claim for a damage of the user's automobile, the automobile being associated with a conducted risk-transfer between the user and the automated risk-transfer system 104. The user device 102 may be any computing device, such as a mobile device, a smart phone, a tablet, a personal digital assistant, a laptop, or any other type and/or form of computing device that is capable of communication. In an example, the user may be a driver or an owner of the automobile. In an implementation, the user may use the user device 102 to access communication services including internet, voice, and data communication services. The user device 102 may also have an application or a browser installed on the user device 102 that enables the user to access the insurance server. The user may be a customer of an insurance organization providing insurance services, for example, through the automated risk-transfer system 104.

According to an embodiment variant, the automated risk-transfer system 104 may be a server providing the claim portal 1041being accessible via the data transmission network 110 by the user using his network-enabled client device 102 for automated support of the user in risk-transfer-related aspects. In an embodiment variant, the automated risk-transfer system 104 may be deployed and/or executed on any type and form of computing device, for example, a computer, network device, or appliance capable of communicating on any type and form of network (such as the network) and performing the operations described herein. In some embodiments, the automated risk-transfer system 104 may be implemented across a plurality of servers, thereby, tasks performed by the automated risk-transfer system 104 may be performed by the plurality of servers. These tasks may be allocated among the cluster of servers by an application, a service, a daemon, a routine, or other executable logic for task allocation. In an embodiment variant, the automated risk-transfer system 104 may be owned or managed or otherwise associated with an insurance company or any entity authorized thereof.

The automated risk-transfer system 104 may include a user management unit 112, a claim processing unit 114, and an output unit 116. The user management unit 112 may create profiles for new customers, manage existing customer profiles, and provide support to the customer on aspects related to the insurance through their individual profiles. The user management unit 112 includes a profile database 142 that stores user profile data including, but are not limited to, user information, user automobile information, user automobile insurance policy information, previous insurance claims and status of filed automobile insurance claims. In the context of the current disclosure, the user management unit 112 provides options to the user to file insurance claims related to automobile damage. For example, the user management unit 112 may provide a graphical user interface (GUI) to input automobile insurance details, automobile information, options to upload automobile damage images, and any additional information. In an example, the user management unit 112 may provide a first notice of loss (FNOL) through the GUI form to provide insurance claim-related input.

The claim processing unit 114 is configured to process the insurance claims filed by the user. The claim processing unit 114, inter alia, includes a text processing unit 122, an image processing unit 124, a mobile sensor data processing unit 126, an automobile sensor data processing unit 128 an incident damage zone, and location unit 130, an unusual damage pattern detector 134 and a fraud detection unit 136.

The text processing unit 122 processes text provided by the user in the claim associated with the risk-transfer to determine and/or recognize a first set of attributes. The first set of attributes includes at least one of the automobile location of the incident, a date of the accident, a time of the accident, the damaged side of car, the damaged parts, and such information. In one or more embodiments, the text processing unit 122 may use known and/or proprietary text processing techniques such as natural language processing (NLP) techniques to process the text.

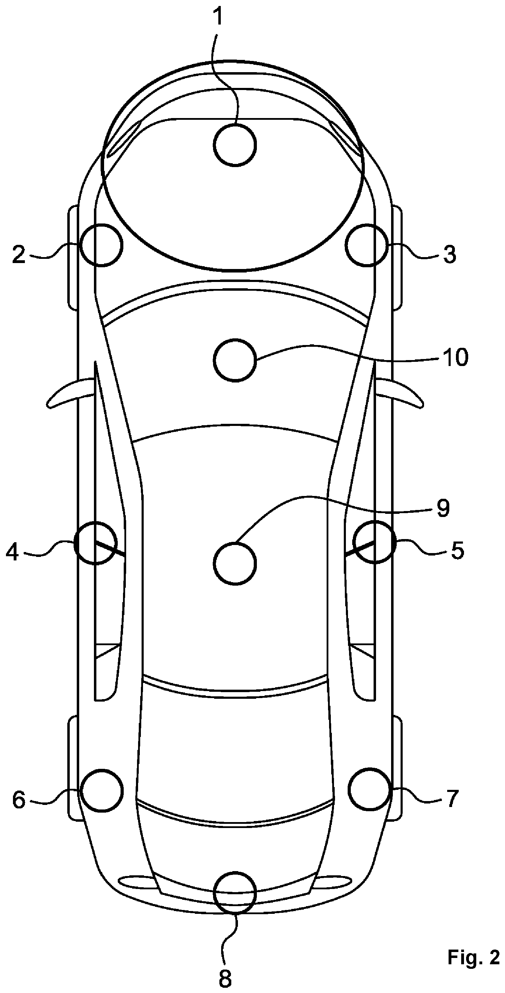

The image processing unit 124 is configured to process the images input by the user to determine damages to one or more zones of the automobile and/or an indication of fraud. The indication of fraud may be evidence indicating that the images depicting the damages to one or more zones of the automobile or automobile parts may be tampered with or fake. In one or more embodiments, the image processing unit 124 may use artificial intelligence (AI), and image processing techniques such as a machine language (ML) based convolutional neural network (CNN) in determining damages to one or more zones of the automobile and/or an indication of fraud. The AI and ML-based CNN of the image processing unit 124 may be trained with a plethora of image data to identify the zones and the damages therein. As a part of determining damages to one or more zones of the automobile, in one or more embodiments, the image processing unit 124 may use the AI to determine a second set of attributes indicative of damage to one or more zones of the automobile. The second set of attributes identifies the zone and damage thereof to at least one zone of the one or more zones. The second set of attributes includes front center zone, front left zone, front right zone, left zone, right zone, rear left zone, rear right zone, rear center zone, and windshield zone. An example illustrating the zones of a car is provided in FIG. 2. Zone 1 may represent a front center zone of the car, zone 2 may represent a front left zone of the car, zone 3 may represent a front right zone of the car, zone 4 may represent a left zone of the car, zone 5 may represent a right zone of the car, zone 6 may represent a rear left zone of the car, zone 7 may represent a rear right zone of the car, zone 8 may represent a rear center zone of the car, zone 9 may represent a roof of the car, and zone 10 may represent a windshield zone of the car. The damages may include a dent, glass shatter, broken front lamp, broken tail lamps, scratch, smash, hailstone dents, and such damages. The image processing unit 124 may use the AI to determine a third attribute that details the damage to the automobile roof or the zone 9.

For an indication of fraud, the image processing unit 124 may use machine learning (ML) with the CNN to process the images. In one or more embodiments, the image processing unit 124 may use machine learning techniques and/or deep learning techniques with the CNN to identify pre-existing damage, parallel based color matching, and a double joint photographic experts group (JPEG) compression. Pre-existing damage may refer to the damage that existed on the automobile before the incident. Color matching may refer to comparing colors of different parts of the same image, which should have the same color. Color matching may also refer to comparing colors of the one or more images with previous provided images to determine whether the images indeed belong to the automobile for which the automobile insurance is claimed. Color matching may refer to comparing colors of the image with reference color values (e.g. provided as normed values, e.g. in values of RAL codes or the like), e.g. provided by the carmaker automobile manufacturer. The double JPEG compression may refer to tampering of images that causes recompression (that is, due to resaving the manipulated image in the JPEG format with a different compression quality factor) after digital tampering.

The mobile sensor data processing unit 126 may process the mobile sensor data to obtain a floating car data (FCD) from a driver driving the automobile or the automobile itself. The mobile sensor data processing unit 126 may process the FCD to determine a fourth set of attributes. The fourth set of attributes include at least one of a passenger's route, trip travel time, estimate traffic state, and global positioning system (GPS) data. In one or more embodiments, the mobile sensor data processing unit 126 may use techniques such as floating cellular data or GPS-based collection methods to obtain the FCD. The FCD may be a time-stamped geo-localization and speed data obtained from mobiles of the moving automobiles. In one or more embodiments, the FCD may provide a Lagrangian description of the automobile movements. The mobile sensor data processing unit 126 may obtain the mobile sensor data through data collected by mobile service providers, through applications that collect FCD data from the driver's mobile phone or such sources. In some examples, the mobile sensor data may be obtained from fleet vehicle service providers. The FCD includes at least a location data, and movement data.

The damage zone and FCD collection unit 132 may process the second set of attributes, the third attribute from the image processing unit 124, and the fourth set of attributes from the mobile sensor data processing unit 126 to obtain a sixth set of attributes. The sixth set of attributes include at least one of information of damage to one or more zones of the automobile and FCD.

The automobile sensor data processing unit 128 may acquire and process data from on-board unit (OBU) sensors of the automobile to obtain a fifth set of attributes. The fifth set of attributes include at least one of camera data, speed data, engine revolutions per minute (RPM) data, rate of fuel consumption, GPS data, moving direction, impact sensor data, and airbag deployment data. The OBU sensors may include a dashboard camera, speedometer, tachometer, flow sensor, GPS device, impact sensor, motion sensor, crash sensors, an accelerometer sensor, a gyroscope sensor and such sensors.
The incident damage zone and location unit 130 may process the fifth set of attributes to obtain a seventh set of attributes that provide damage information associated with the automobile and incident location information. The seventh set of attributes may include at least one of the information associated with damage to one or more zones of the automobile and the GPS data associated with the incident location.

As an embodiment variant, the damage zone and location unit 130 provides an automated object localization process. Object localization can be used for multiple purposes, such as, determining the location of a certain object within an image, and also to determine a damage (variance) within that certain object. For example, to obtain object localization, a "sliding window" technique can be used. A "sliding window" is obtained by creating small overlapping sub-sections of an image and classifying each one separately. In the event a sub-section is classified to contain an object, the corresponding area within that image is then classified as containing that object. This results in localized areas within the original image that are classified as either containing or not containing an object. Also, convolutional neural networks can also be used to perform the inventive object localization without the use of a sliding window. The later method includes (i) the "Fast Region-based Convolutional Network method" (Fast R-CNN) as described by "Fast R-CNN", (ii) a "Unified, Real-Time Object Detection" (YOLO), and/or (iii) "Saliency Maps", which are generically known in the prior art. Both the (i) and (ii) output bounding box predictions with confidence percentages for each bounding box containing objects upon which the networks have been trained to recognize. Saliency maps (iii) perform object localization estimations per pixel using back-propagation on a single classified image by applying a convolutional network architecture suitable for single image classification. The aim of a convolutional neural network for image classification is to be able to take raw pixel data as an input and return a correct classification for the main content within the image. For the present image classification, the input data can e.g. be an image of a pre-determined size and in either grayscale or RGB color space. A convolutional layer is applied to generate the output of neurons connected to local regions in the input, each computes a dot product between their weights and the small region they are connected to. Each convolutional layer can e.g. contain a number of these 'convolutional filters' producing multiple activations per image. Further, e.g. either a Relu (Rectified Linear unit) or Sigmoid function can be used as an activation function within the present convolutional network. A pooling layer can be used to down-samples the dimensions of the data (i.e. width, height). A SoftMax function (or normalized exponential) can be used to take an input vector (e.g. the last layer of fully connected neurons of the network) and returns a vector of length equal to that of the training classes with an element x for each class within the range

$0 \leq x \leq 1$ and such that $\sum_{i=1}^{i=n} x_n = 1$, i.e. a probability value for each class.

The unusual damage pattern detector 134 is configured to receive and perform a first analysis and the second analysis on the first set of attributes, the sixth set of attributes, and the seventh set of attributes. The first analysis determines whether there are damages to one or more zones on opposite sides of the automobile when the third attribute indicates damage to the automobile roof. The second analysis determines whether there are damages to one or more zones on opposite sides of the automobile when the third attribute indicates that there is no damage to the automobile roof. Based on the first analysis and the second analysis, the unusual damage pattern detector may determine the unusual damage pattern in the automobile damage. The unusual damage pattern indicates a damage pattern to the automobile that may not have happened to the car in an accident, natural calamities, or such factors. For example, in an accident due to automobile collision where a car collides with a vehicle or an object from a front left side, the front left side would be damaged. A damage on back right side of the vehicle is unlikely as the collision is on the front left side, and if there is a damage to the back right side of the car, then that would indicate the unusual damage pattern.

The fraud detection unit 136 may process the indication of fraud and the unusual damage pattern obtained from the image processing unit 124 and the unusual damage pattern detector 134, respectively, to determine whether the claim of automobile insurance for automobile damage is fraudulent or not. The fraud detection unit 136 may determine that the claim of automobile insurance for automobile damage is fraudulent on determining that there is at least one of the unusual damage pattern and the fraud identifier.

The insurance verifier's device 106 may be any computing device, such as a mobile device, a smart phone, a tablet, a personal digital assistant, a laptop, or any other type and/or form of computing device that is capable of communication. In an example, the insurance verifier may be a professional who may be representative of the insurance firm or a third-party contracted by the insurance firm assigned to gather information associated with the automobile incident. In an implementation, the insurance verifier's device 106 may have an application or a browser installed on the user device 102 that enables the insurance appraiser to access the insurance server. The insurance verifier is a professional who may be a representative of the insurance firm or a third-party who is contracted by the insurance firm and assigned to gather information associated with the automobile incident.

According to an embodiment, the network may be a private network or a public network. Further, the network 110 may be connected via wired and/or wireless links. Wired links may include Digital Subscriber Line (DSL), coaxial cable lines, or optical fiber lines. Wireless links may include Bluetooth®, Bluetooth Low Energy (BLE), ANT/ANT+, ZigBee, Z-Wave, Thread, Wi-Fi®, Worldwide Interoperability for Microwave Access (Wi-MAX®), mobile WiMAX®, WiMAX®-Advanced, NFC, Sig-Fox, LoRa, Random Phase Multiple Access (RPMA), Weightless-N/P/W, an infrared channel or a satellite band. The wireless links may also include any cellular network standards to communicate among mobile devices, including standards that qualify as 1G, 2G, 3G, 4G, or 5G. The network standards may qualify as one or more generations of mobile telecommunication standards by fulfilling a specification or standards such as the specifications maintained by the International Telecommunication Union. The 3G standards, for example, may correspond to the International Mobile Telecommunications-2000 (IMT-2000) specification, and the 4G standards may correspond to the International Mobile Telecommunication Advanced (IMT-Advanced) specification. Examples of cellular network standards include AMPS, GSM, GPRS, UMTS, CDMA2000, CDMA-1xRTT, CDMA-EVDO, LTE, LTE-Advanced, LTE-M1, and Narrowband IoT (NB-IoT). Wireless standards may use various channel access methods, e.g., FDMA, TDMA, CDMA, or SDMA. In some embodiments, different types of data may be transmitted via different links and standards. In other embodiments, the same types of data may be transmitted via different links and standards.

Further, the network 110 may be any type and/or form of network. The geographical scope of the network may vary widely and the network 110 can be a body area network (BAN), a personal area network (PAN), a local-area network (LAN), e.g., Intranet, a metropolitan area network (MAN), a wide area network (WAN), or the Internet. The topology of the network 110 may be of any form and may include, e.g., any of the following: point-to-point, bus, star, ring, mesh, or tree. The network 110 may be an overlay network that is virtual and sits on top of one or more layers of other networks. Also, the network 110 may be of any such network topology as known to those ordinarily skilled in the art capable of supporting the operations described herein. The network 110 may utilize different techniques and layers or stacks of protocols, including, e.g., the Ethernet protocol, the internet protocol suite (TCP/IP), the ATM (Asynchronous Transfer Mode) technique, the SONET (Synchronous Optical Networking) protocol, or the SDH (Synchronous Digital Hierarchy) protocol. The TCP/IP internet protocol suite may include application layer, transport layer, internet layer (including, e.g., IPv4 and IPv6), or the link layer. The network 110 may be a type of broadcast network, a telecommunications network, a data communication network, or a computer network.

According to some embodiments, the user device 102 and the insurance verifier's device 106 may include a processor and a memory. In an implementation, the processor may be any logic circuitry that responds to, and processes instructions fetched from the memory. In many embodiments, the processor may be provided by a microprocessor unit, e.g., those manufactured by Intel Corporation of Mountain View, California; those manufactured by Motorola Corporation of Schaumburg, Illinois; the ARM processor and TEGRA system on a chip (SoC) manufactured by Nvidia of Santa Clara, California; the POWER7 processor, those manufactured by International Business Machines of White Plains, New York; or those manufactured by Advanced Micro Devices of Sunnyvale, California. The processor may utilize instruction-level parallelism, thread-level parallelism, different levels of cache, and multi-core processors. A multi-core processor may include two or more processing units on a single computing component. Examples of multi-core processors include the AMD PHENOM IIX2, INTER CORE i5, and INTEL CORE i7.

The memory may include one or more memory chips capable of storing data and allowing any storage location to be directly accessed by the processor. The memory may be Dynamic Random-Access Memory (DRAM) or any variants, including static Random-Access Memory (SRAM), Burst SRAM or SynchBurst SRAM (BSRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Single Data Rate Synchronous DRAM (SDR SDRAM), Double Data Rate SDRAM (DDR SDRAM), Direct Rambus DRAM (DRDRAM), or Extreme Data Rate DRAM (XDR DRAM). In some embodiments, the memory may be non-volatile; e.g., non-volatile read access memory (NVRAM), flash memory non-volatile static RAM (nvSRAM), Ferroelectric RAM (FeRAM), Magnetoresistive RAM (MRAM), Phase-change memory (PRAM), conductive-bridging RAM (CBRAM), Silicon-Oxide-Nitride-Oxide-Silicon (SONOS), Resistive RAM (RRAM), Racetrack, Nano-RAM (NRAM), or Millipede memory. The memory may be based on any of the above-described memory chips, or any other available memory chips capable of operating as described herein.

According to an embodiment, the user device 102 and the insurance verifier's device 106 may further include an operating system and a host of sensors. In an implementation, the operating system may be, for example, software including programs and data that manages hardware of the user device 102 and the insurance verifier's device 106 and provides services for execution of applications included in the mobile phone. Known examples of the operating system may include iOS®, Android®, Microsoft® Windows, and Linux.

According to an embodiment, the insurance server 104 may include a processor 154 and a memory 152. In an implementation, the processor 154 may be any logic circuitry that responds to, and processes instructions fetched from the memory 152. In many embodiments, the processor 154 may be provided by a microprocessor unit, e.g., those manufactured by Intel Corporation of Mountain View, California; those manufactured by Motorola Corporation of Schaumburg, Illinois;

the ARM processor and TEGRA system on a chip (SoC) manufactured by Nvidia of Santa Clara, California; the POWER7 processor, those manufactured by International Business Machines of White Plains, New York; or those manufactured by Advanced Micro Devices of Sunnyvale, California. The processor 154 may utilize instruction-level parallelism, thread-level parallelism, different levels of cache, and multi-core processors. A multi-core processor may include two or more processing units on a single computing component. Examples of multi-core processors include the AMD PHENOM IIX2, INTER CORE i5, and INTEL CORE i7.

The memory 152 may include one or more memory chips capable of storing data and allowing any storage location to be directly accessed by the processor 154. The memory 152 may be Dynamic Random-Access Memory (DRAM) or any variants, including static Random-Access Memory (SRAM), Burst SRAM or Synch-Burst SRAM (BSRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Single Data Rate Synchronous DRAM (SDR SDRAM), Double Data Rate SDRAM (DDR SDRAM), Direct Rambus DRAM (DRDRAM), or Extreme Data Rate DRAM (XDR DRAM). In some embodiments, the memory 152 may be non-volatile; e.g., non-volatile read access memory (NVRAM), flash memory non-volatile static RAM (nvSRAM), Ferroelectric RAM (FeRAM), Magnetoresistive RAM (MRAM), Phase-change memory (PRAM), conductive-bridging RAM (CBRAM), Silicon-Oxide-Nitride-Oxide-Silicon (SONOS), Resistive RAM (RRAM), Racetrack, Nano-RAM (NRAM), or Millipede memory. The memory 152 may be based on any of the above-described memory chips, or any other available memory chips capable of operating as described herein.

In an implementation, the text processing unit 122, the image processing unit 124, the mobile sensor data processing unit 126, the automobile sensor data processing unit 128, the incident damage zone and location unit 130, the damage zone and FCD collection unit 132, the unusual damage pattern detector 134, and the fraud detection unit 136 may be coupled to the processor 154 and the memory 152. In some embodiments, the text processing unit 122, the mobile sensor data processing unit 126, the automobile sensor data processing unit 128, the incident damage zone and location unit 130, the damage zone and FCD collection unit 132, the unusual damage pattern detector 134, and the fraud detection unit 136 amongst other units, may include routines, programs, objects, components, data structures, etc., which may perform particular tasks or implement particular abstract data types. The text processing unit 122, the mobile sensor data processing unit 126, the automobile sensor data processing unit 128, the incident damage zone and location unit 130, the damage zone and FCD collection unit 132, the unusual damage pattern detector 134, and the fraud detection unit 136 may also be implemented as, signal processor(s), state machine(s), logic circuitries, and/or any other device or component that manipulate signals based on operational instructions.

In some embodiments, the text processing unit 122, the image processing unit 124, the mobile sensor data processing unit 126, the automobile sensor data processing unit 128, the incident damage zone and location unit 130, the damage zone and FCD collection unit 132, the unusual damage pattern detector 134, and the fraud detection unit 136 may be implemented in hardware, instructions executed by a processing unit, or by a combination thereof. The processing unit may comprise a computer, a processor, a state machine, a logic array or any other suitable devices capable of processing instructions. The processing unit may be a general-purpose processor that executes instructions to cause the general-purpose processor to perform the required tasks or, the processing unit may be dedicated to performing the required functions. In some embodiments, the text processing unit 122, the image processing unit 124, the mobile sensor data processing unit 126, the automobile sensor data processing unit 128, the incident damage zone and location unit 130, the damage zone and FCD collection unit 132, the unusual damage pattern detector 134, and the fraud detection unit 136 may be machine-readable instructions which, when executed by a processor/processing unit, perform any of the desired functionalities. The machine-readable instructions may be stored on an electronic memory device, hard disk, optical disk, or other machine-readable storage medium or non-transitory medium. In an implementation, the machine-readable instructions may also be downloaded to the storage medium via a network connection. In an example, the machine-readable instructions may be stored in memory 152.

In some embodiments, the insurance server 104 may include a data storage 138. In an implementation, the data storage 138 may store information related to, for example, image dataset, training data, testing data, machine learning models, and such information. In an implementation, information stored in the data storage 138 may be periodically or dynamically updated as required.

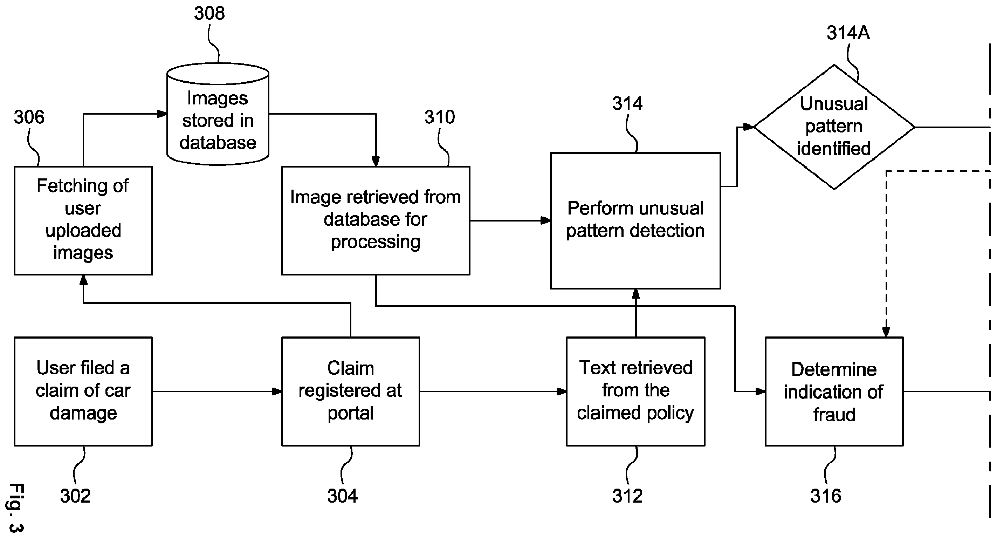

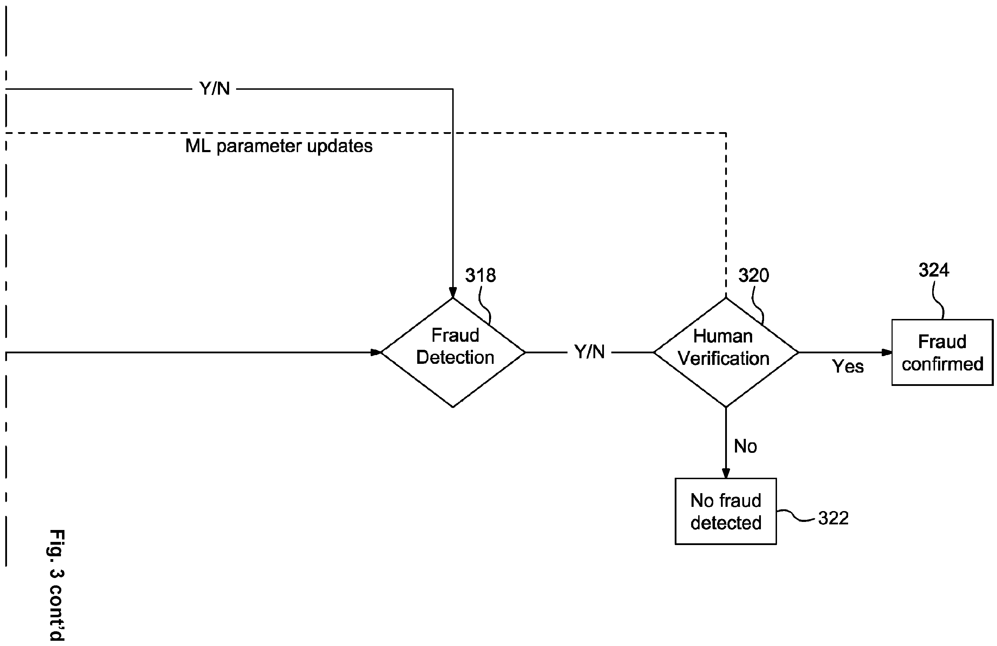

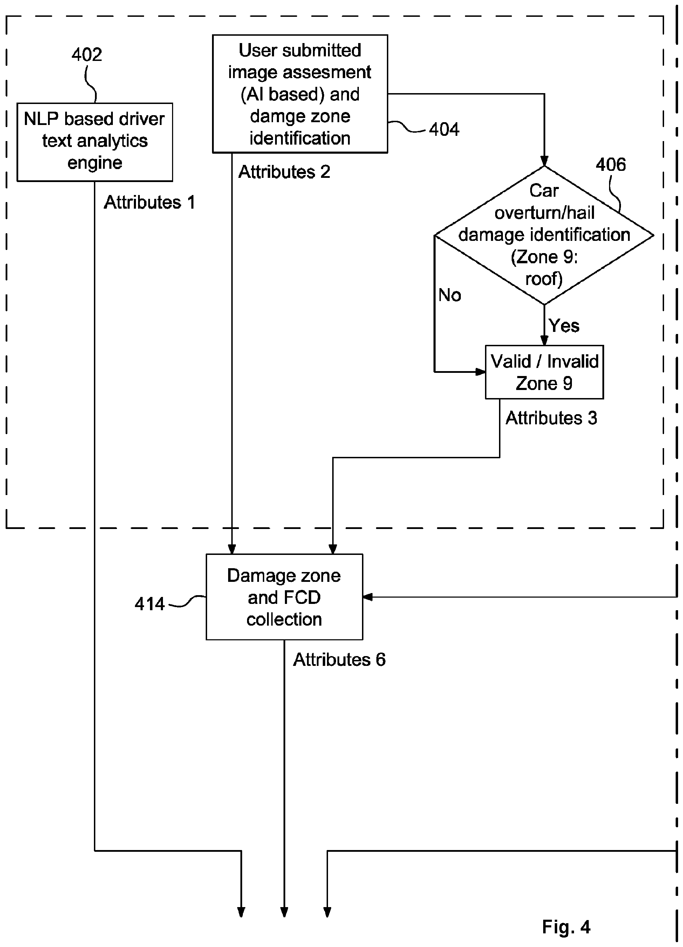

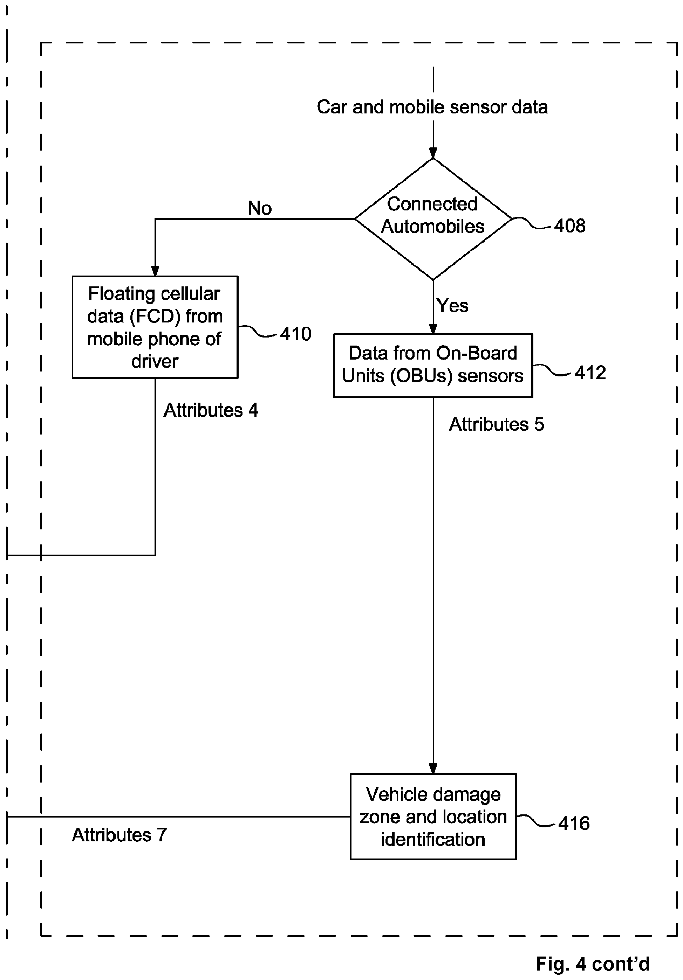

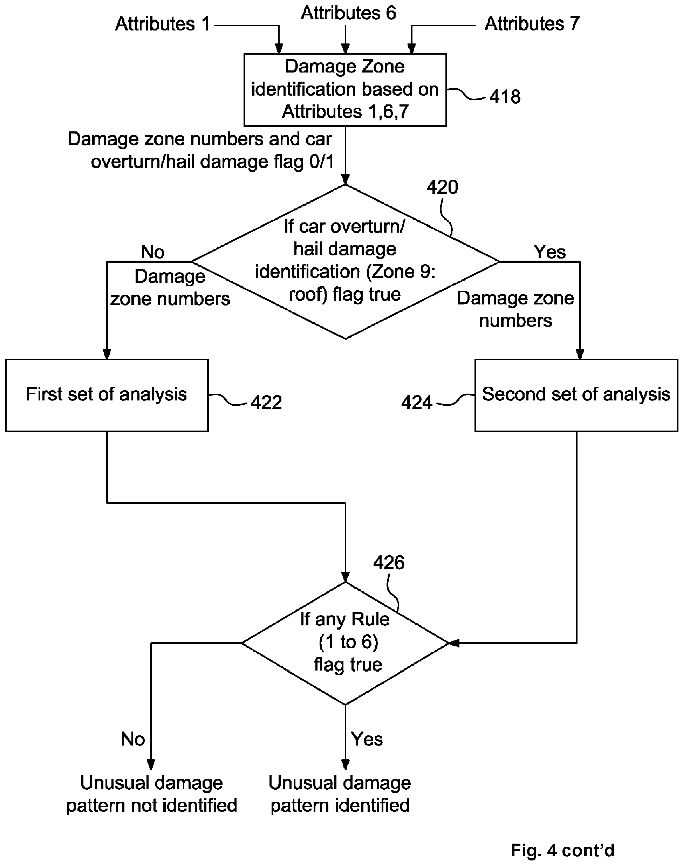

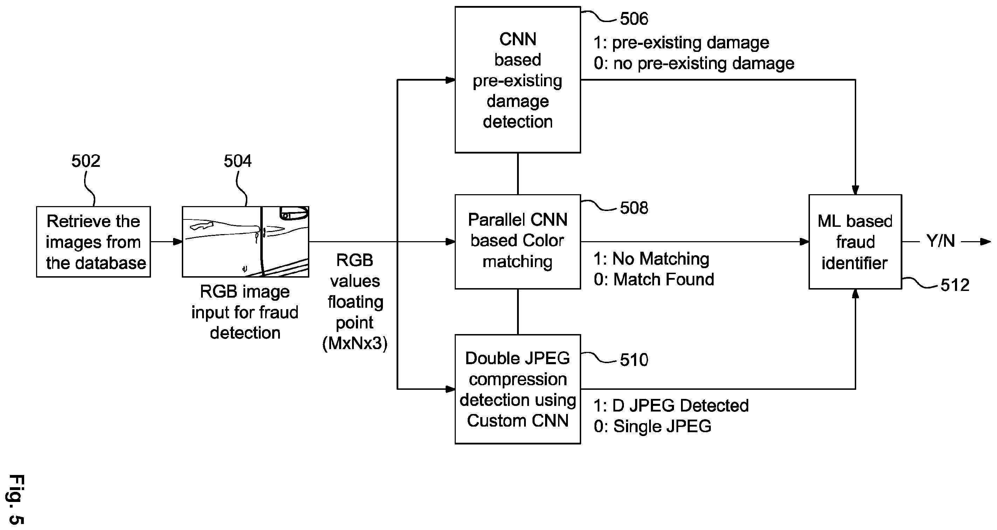

The user may have an automobile insurance policy for an automobile with the insurance firm. The automobile may be involved in an incident, causing damages to the automobile. The incident may be an accident, natural calamity, or such incidents. The accident may be an event where the automobile is involved in a collision with another automobile or involved in a collision with a pedestrian or another object. The natural calamity may be a tornado, earthquake, flood, and such calamities. The user may want to claim compensation for the damages using the automobile insurance policy. According to an embodiment, the user may log in to the profile in the insurance server 104 to file the automobile insurance claim. The insurance server 104 may provide a first notice of loss (FNOL) form to inform the insurance service provider about the incident and a potentially covered loss. The insurance server 104 may provide a GUI to input details associated with the incident and damages to the automobile. The FNOL form may enable the user to file a draft claim or an open claim. The draft claim may be a claim having basic incident information and but not enough information for the insurance server 104 or the insurance firm claim to enter an adjudication process. The open claim may be a claim that may have enough information for the insurance server 104 or the insurance firm to enter the adjudication process. In instances where the user is unable to provide enough information in the FNOL form, the insurance server 104 may register the claim as the draft claim and may allow the user to provide more details at a later point in time. In instances where the user is able to provide enough information in the FNOL form, the insurance server 104 may register the claim as the open claim. The user may file the claim by providing details of the incident through text data, and/or uploading one or more images capturing damages to the automobile. The insurance server 104 may also obtain the mobile sensor data and the automobile sensor data from the driver's mobile information and the automobile, respectively. In some examples, the insurance server 104 may obtain the mobile sensor data and the automobile sensor data from various sources that may include a third party. The insurance server 104 may process the automobile insurance claim for detection of fraud. The insurance server 104 may process the text data, the one or more images, the mobile sensor data, and the automobile sensor data to determine the unusual damage pattern and the indication(s) of fraud. In one or more embodiments, the insurance server 104 may utilize the text processing unit 122, the image processing unit 124, the mobile sensor data processing unit 126, the automobile sensor data processing unit 128, the incident damage zone and location unit 130, the damage zone and FCD collection unit 132, the unusual damage pattern detector 134, and the fraud detection unit 136, appropriately to process the automobile insurance claim for detection of fraud. A process of determining a fraud in automobile insurance is described in FIG. 3, a process of determining the unusual damage pattern is described in FIG. 4, and the process of determining the indication(s) of fraud is described in FIG. 5.

FIG. 3 is a flow diagram illustrating a process for determining a fraud in an automobile insurance claim, according to some embodiments.

Step 302 includes the insurance server 104 receiving from a user, an automobile insurance claim for damage to an automobile. The user filed automobile insurance claim may include text data and one or more images associated with the automobile damage (the one or more images may also be collected in step 306). The insurance server 104 may obtain information such as the mobile sensor data and the automobile sensor data from

Step 304 includes the insurance server 104 registering the automobile insurance claim through the portal provided by the insurance server 104. Step 306 includes the insurance server 104 obtaining one or more images of the damages to the automobile from the user as a part of the automobile insurance claim. The one or more images may be images of the damage caused to one or more zones of the user's automobile. Step 308 includes the insurance server 104 storing the images in the profile database 142.

Step 310 includes retrieving the one or more images from the profile database 142 for processing. Step 312 includes obtaining the text data from the automobile insurance policy. Step 314 includes processing the text data, the one or more images, and the automobile and mobile sensor data to perform the unusual damage pattern detection. In one or more embodiments, the unusual damage pattern detector 134 may perform the unusual damage pattern detection. Step 314A includes the insurance server 104 determining whether there is the unusual damage pattern detected. Determining the unusual damage pattern is described more in detail in FIG. 4.

Step 316 includes processing the one or more images to determine the indication of the fraud. In one or more embodiments, the image processing unit 124 may perform the processing using the ML-based CNN. Determining the indication of the fraud is described more in detail in FIG. 5.

Step 318 includes determining a fraud in the automobile insurance claim based on at least one of the unusual damage pattern and the indication of fraud. In one or more embodiments, the fraud detection unit 136 may perform the determination of step 318.

Step 320 includes performing a human verification on the automobile and/or the one or more images to determine unusual damage pattern and the indication of fraud. In one or more embodiments, the human verification may be performed by the insurance verifier associated with the insurance firm. The human verification output may be provided as an ML parameter update to the CNN. If the human verification indicates no fraud, step 322 includes the insurance server 104, indicating that there is no fraud. If the human verification indicates that there is a fraud, step 342 includes confirming by the insurance server 104, the fraud in the automobile insurance claim based on the human verification.

FIG. 4 is a flow diagram to determine the unusual damage pattern, according to one or more embodiments.

Step 402 includes obtaining the text data provided by the user and processing the text data using the text processing engine to obtain the first set of attributes. In one or more embodiments, the text processing engine may process the text data to obtain such as the location of the incident, date of the incident, time of the incident, and damaged side of automobile and parts as a part of the first set of attributes. The text processing engine may use techniques such as natural language processing to obtain the first set of attributes.

Step 404 includes processing the one or more images to determine the second set of attributes. In one or more embodiments, the image processing unit 124 processes the one or more images. The image processing unit 124 may use the AI to analyze the one or more images. The AI may automatically determine a zone in which the damage is found, identify a type of damage, identifying depth of damage, and an such information. The image processing unit 124 distinguishes and classifies zones and damages to obtain the second set of attributes. The zones may include zone 1- zone 8 and zone 10.

Step 406 includes processing the one or more images to determine the third attribute. In one or more embodiments, the image processing unit 124 may perform the processing of step 406. The third attribute includes details of the damage to the roof of the automobile. For example, the image processing unit 124 uses AI to determine whether there is an image to the roof of the automobile and whether there is a damage to the roof of the automobile, when the roof or zone 9 is identified. In an example, the zone 9 represents the roof of the automobile. In some examples, step 406 may be merged with step 404 or performed separately.

Parallely or sequentially, the claim processing unit 114 may process the automobile sensor data and/or the mobile sensor data. In step 408, it may be determined whether the automobile is a part of connected automobiles. In one example, the connected automobiles may refer to a fleet of vehicles. If the automobile is not a part of the connected automobiles, step 410 is executed. Step 410 includes obtaining FCD by processing the mobile sensor data to generate the fourth set of attributes. In an example, the mobile sensor data processing unit 126 determines the FCD using techniques such as the floating cellular data technique. If the automobile is not a part of connected automobiles to the car, then step 412 is executed. Step 412 includes obtaining and processing the OBUs sensors data to obtain the fifth set of attributes. In an example, the automobile sensor data processing unit 128 may process the OBUs sensor data.

Step 414 includes processing the second set of attributes, the third attribute, and the fourth set of attributes to obtain the sixth set of attributes. In one or more embodiments, the damage zone and FCD collection unit 132 performs the processing of step 414. The sixth set of attributes are indicative of the at least one of information of damage to one or more zones of the automobile and the FCD attributes.

Step 416 includes processing the fifth set of attributes to obtain the seventh set of attributes that provide damage information associated with the automobile, and location information. In one or more embodiments, the incident damage zone and location unit 130 performs the processing of step 416. Step 418 includes processing the first set of attributes, the sixth set of attributes, and the seventh set of attributes to identify the zones that show damage and whether there is damage to the roof of the automobile. In one or more embodiments, the incident damage zone and location unit 130 may perform the processing of step 418.

Step 420 includes determining whether there is damage to the roof of the automobile. If there is damage to the roof of the automobile, in step 422, perform the first analysis on the first set of attributes, the sixth set of attributes, and the seventh set of attributes to determine whether there are damages to one or more zones on opposite sides of the automobile when the third attribute indicates damage to the automobile roof. In one embodiment, a cognition rule-based decision is used for performing the first analysis. An example cognition rule-based decision for performing the first analysis when the third attribute indicates a damage to the automobile roof is provided below.

Rule 1: {(Zone1^Zone6)/(Zone1^Zone7)/(Zone1^-Zone6^Zone7)}^Zone9

Rule 2: [(Zone2^Zone5)/(Zone2^Zone7)/(Zone2^-Zone8)... /(Zone2^{(Zone5^Zone7)/(Zone5^Zone8)/(Zone7^Zone8)}... /(Zone2^Zone5^Zone7^-Zone8)]^Zone9

Rule 3: [(Zone3^Zone4)/(Zone3^Zone6)/(Zone3^-Zone8)... /(Zone3^{(Zone4^Zone6)/(Zone4^Zone8)/(Zone6^Zone8)}... /(Zone3^Zone4^Zone6^-Zone8)]^Zone9

Rule 4: Zone4^Zone5^Zone9

Rule 5: Zone8^Zone10^Zone9

Rule 6: (Zone1/Zone2/Zone3/Zone4/Zone5/Zone6/-Zone7/Zone8/Zone10)^Zone9

Rule 7: Zone1^Zone2^Zone3^Zone4^Zone5^Zone6^Zone7^Zone8^Zone9^Zone10,

Rule 8: Additional miscellaneous rules

The "^" represents "AND" function, while "/" represents "OR" function.

Step 424 includes performing the second analysis on the first set of attributes, the sixth set of attributes, and the seventh set of attributes to determine whether there are damages to one or more zones on opposite sides of the automobile when the third attribute indicates no damage to the automobile roof. In one embodiment, the cognition rule-based decision is used for performing the first analysis. An example cognition rule-based decision for performing the second set of analysis when the third attribute indicates no damage to the automobile roof is provided below.

Rule 1: (Zone 1^Zone6)/(Zone1^Zone7)/(Zone1^-Zone6^Zone7)

Rule 2: (Zone2^Zone5)/(Zone2^Zone7)/(Zone2^-Zone8)... /(Zone2^{(Zone5^Zone7)/(Zone5^Zone8)/(Zone7^Zone8)}... /(Zone2^Zone5^Zone7^-Zone8)

Rule 3: (Zone3^Zone4)/(Zone3^Zone6)/(Zone3^-Zone8)... /(Zone3^{(Zone4^Zone6)/(Zone4^Zone8)/(Zone6^Zone8)}... /(Zone3^Zone4^Zone6^-Zone8)

Rule 4: Zone4^Zone5

Rule 5: Zone8^Zone10

Rule 6: Zone1^Zone2^Zone3^Zone4^Zone5^Zone6^Zone7^Zone8^Zone10

Rule 7: Additional miscellaneous rules

The "^" represents "AND" function, while "/" represents "OR" function.

Step 426 includes determining whether the first analysis and/or the second analysis returns an output of true value. If there is an output of true value, then the unusual damage pattern detector 134 indicates that the damage to the automobile demonstrates the unusual damage pattern.

FIG. 5 depicts a flow diagram to determine an indication of the fraud, according to some embodiments.

Step 502 includes retrieving images from the database for fraud detection. In step 504, the images are represented by a red-green-blue (RGB) image format. The RGB image format that is also referred to as a truecolor image is represented by a M x N x 3 data array that defines red, green, and blue color components for each individual pixel, where M is the number of rows, and N is the number of columns.

In step 506, the RGB image format is processed by the image processing unit 124 using CNN to determine pre-existing damage. A manual process of determining pre-existing damage is highly non-reliable and error-prone as it is challenging for a human to differentiate the pre-existing damage with the current damages in many cases. Some examples where pre-existing damage may be identified include a presence of rust that indicates that the damage occurred in the past period, damages at places which is away from zones that experienced a collision, and such damages. Unless images of the automobile before the incident is available, it is difficult to determine the pre-existing damage. Thus, image processing using ML-based CNN is used. As a part of training the image processing unit 124 using CNN to determine pre-existing damage, a large data set of existing images are used. For example, over 5000 different images having damages to various zones is used (in some examples, images without damages are also used). In an example, the data may be split to 80% - 20%, with 80% of the data used for training and 20% of the data used for testing. Further, the CNN architecture may be formed using two or more convolution layers, pooling layers, fully connected layers and softmax layers. Each convolutional layer may be set with a defined filter size. A rectified linear unit (RELU) non-linearity may be used for every convolutional layer, and appropriate weights are provided. The trained CNN may perform the analysis on the one or more images to determine the presence of pre-existing damages. Step 506 may output a logical 1 in response to pre-existing damage, and a logical 0 when there is no pre-existing damage.

In step 508, the RGB image is processed by the image processing unit 124 using parallel CNN based color matching. Similar to pre-existing detection, image processing using ML-based parallel based CNN color matching is used for the identification of fraud. As a part of training the image processing unit 124 using CNN to perform color matching, a large data set of existing images are used. For example, over 5000 different images having different colors are used. The dataset may be augmented and classified for further process. Further, the CNN architecture may be formed using multiple convolution layers, pooling layers, fully connected layers and software layers. Each convolutional layer may be set with a defined filter size. A rectified linear unit (RELU) non-linearity may be used for every convolutional layer, and appropriate weights are provided. The trained CNN may perform the analysis on the one or more images to match the colors of the one or more images to determine if the images indeed belong to the same automobile and whether the automobile in the one or more images is indeed automobile of the user. Step 508 may output a logical 1 in response to no existing match and a logical 0 when there is a match found.

In step 510, the RGB image is processed by the image processing unit 124 to detect double JPEG compression using custom CNN. In image processing using ML-based CNN for double JPEG compression, images that are not tampered, and images that are tampered are provided to the CNN training. A large dataset of image sets (that is the images that are not tampered and correspond images that are tampered) are provided to CNN for training. Also, a portion of about 10%-20% of the dataset is used for testing. Further, a custom CNN architecture may be formed using multiple convolution layers, pooling layers, fully connected layers, and softmax layers. Each convolutional layer may be set with a defined filter size. For the convolutional connections, an appropriate kernel size (M × N) along with a definition for the number of kernels (k), and stride (s) is set. For the pooling connections, an appropriate pooling size (m × n), and pooling stride (s) 2, and type of pooling (for example, max pooling or average pooling) is set. Each full connection has a defined number of neurons, and the output of the last neuron is sent to a two-way softmax connection, which produces the probability that each sample is classified into each class. In the CNN network, ReLUs with an activation function are used for each connection. The trained CNN may perform the analysis on the one or more images to determine whether there are any double JPEG compression images. Step 510 may output a logical 1 in response to determining double JPEG compression, and a logical 0 when there are only single JPEG images found.

In step 512, the ML based fraud identifier processes the results of the image processing unit 124 for the pre-existing damage using the CNN, the parallel CNN based color matching, and the double JPEG compression using custom CNN to determine any indication of fraud.

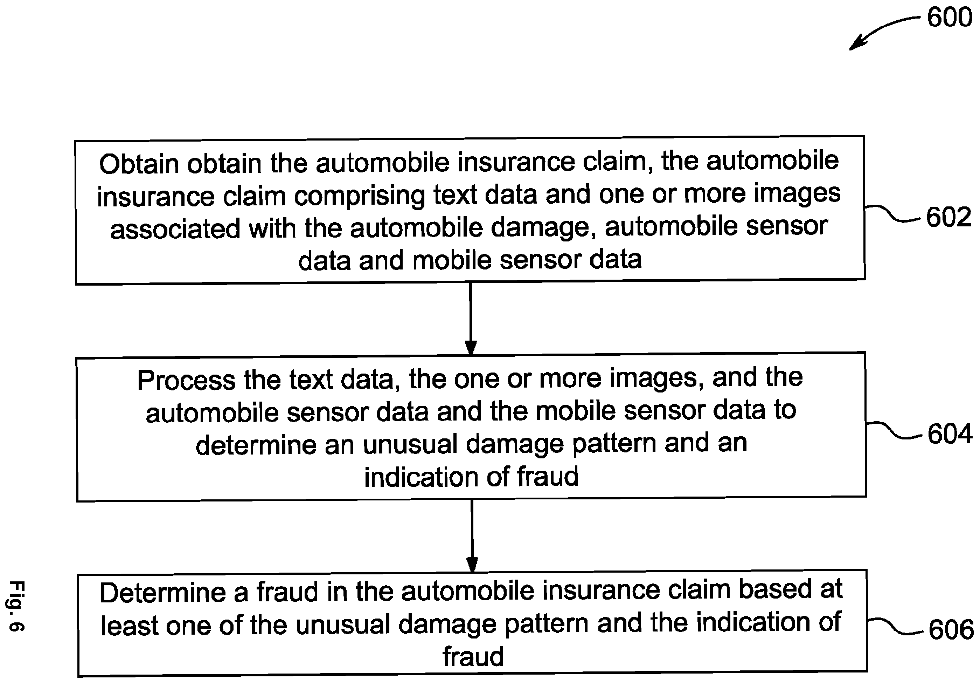

FIG. 6 depicts a process flow 600 for detecting a fraud in an automobile insurance claim, according to some embodiments.

Step 602 includes obtaining the automobile insurance claim. The automobile insurance claim includes text data, one or more images associated with the automobile damage, and automobile sensor data, and mobile sensor data.

Step 604 includes processing the text data, the one or more images, and the automobile and mobile sensor data to determine an unusual damage pattern and an indication of fraud.

Step 606 includes determining fraud in the automobile insurance claim based on the unusual damage pattern and the indication of fraud.

While various embodiment variants of the methods and systems have been described, these embodiments are illustrative and in no way limit the scope of the described methods or systems. Those having skill in the relevant art can effect changes to form and details of the described methods and systems without departing from the broadest scope of the described methods and systems. Thus, the scope of the methods and systems described herein should not be limited by any of the illustrative embodiments and should be defined in accordance with the accompanying claims and their equivalents.

The described intelligent fraud detector has the advantage to provide an automated device/system and method for processing digital images and/or optical sensory data (e.g. still images or video images) to automatically provide specific measures, such as, (i) triage results (e.g. a car is repairable or a total loss), (ii) detection of potentially suspicious (i.e. manipulated) images, (iii) detection of potential fraud utilizing specific data extracted from the image data and/or received from suitable databases (i.e. industry fraud databases, e.g. a insurance fraud register, a motor insurance database, a DVLA, vehicle register or VIN check to check the history of a vehicle), and other relevant data, (vi) repair time, (v) required parts, (vi) cost to repair / replace parts. With the fraud detector, images can be processed at any stage during the risk-transfer claim lifecycle and can be used across varying product lines, such as, for example, first notification of loss (FNOL) for motor vehicles and/or homes etc.

### (B) Automated *damage recognition and classification*

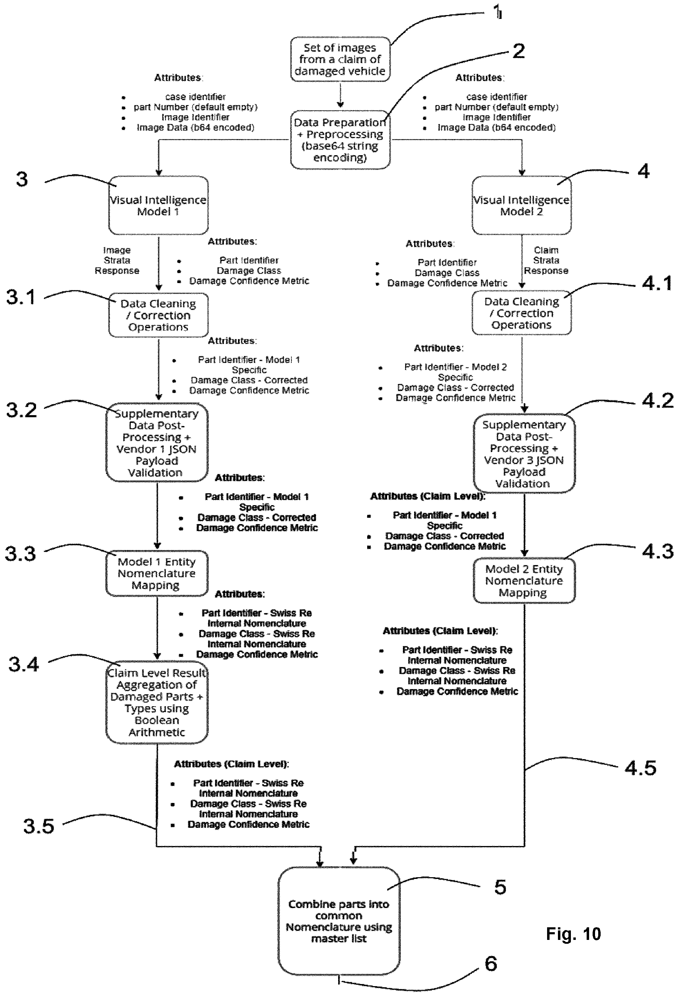

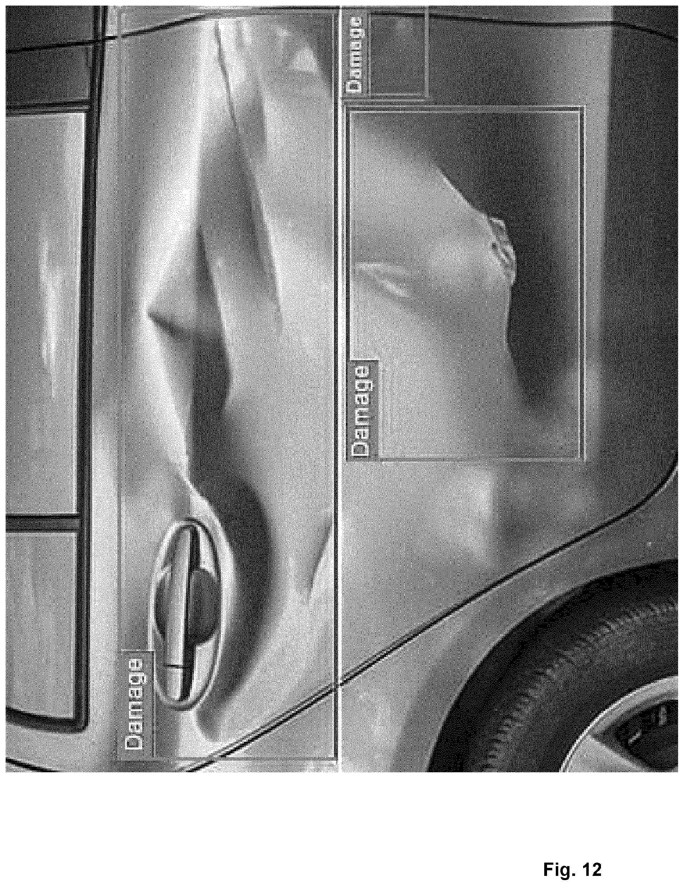

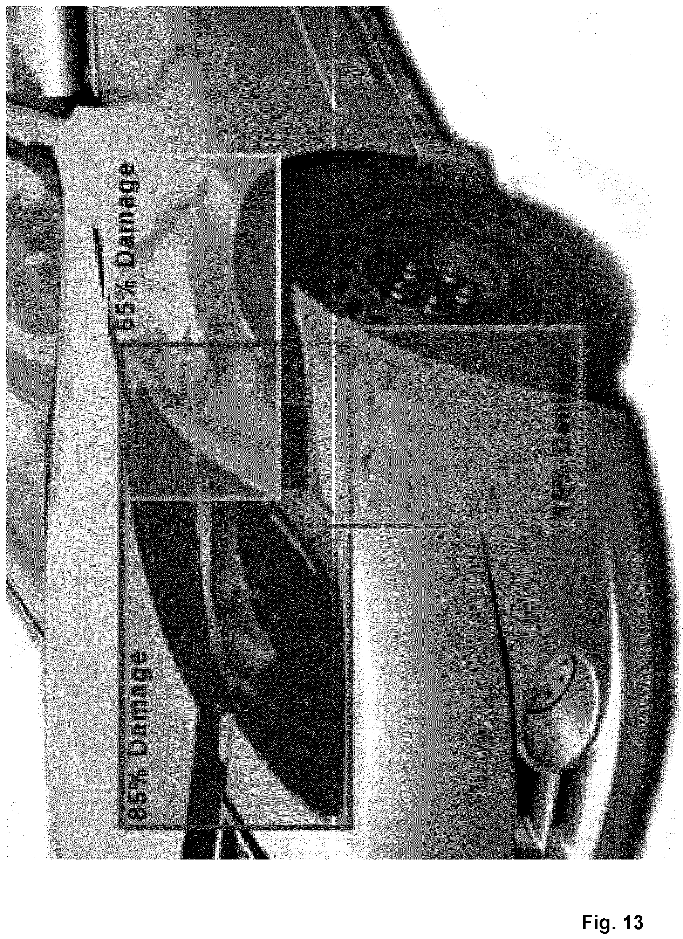

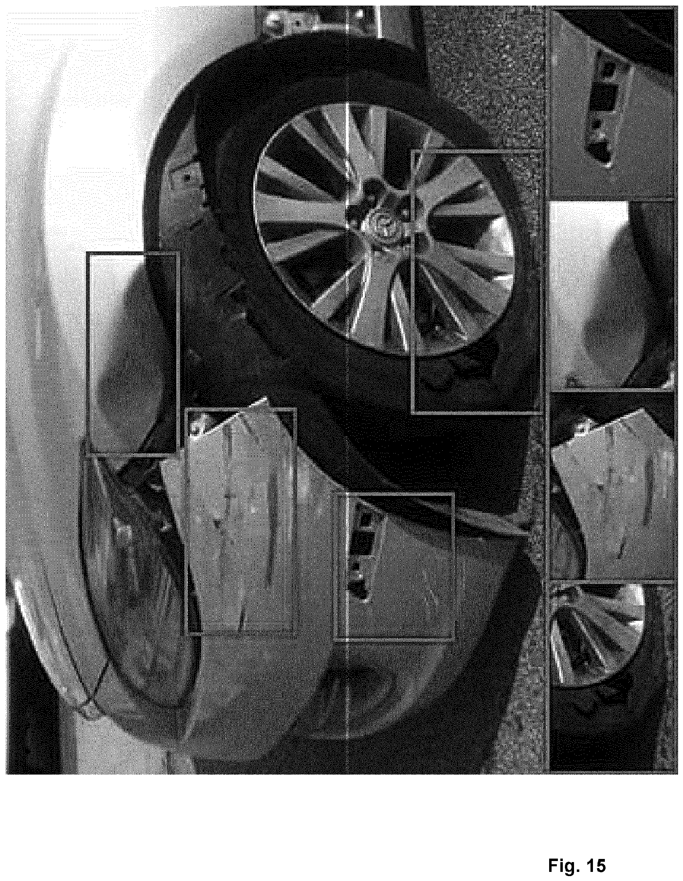

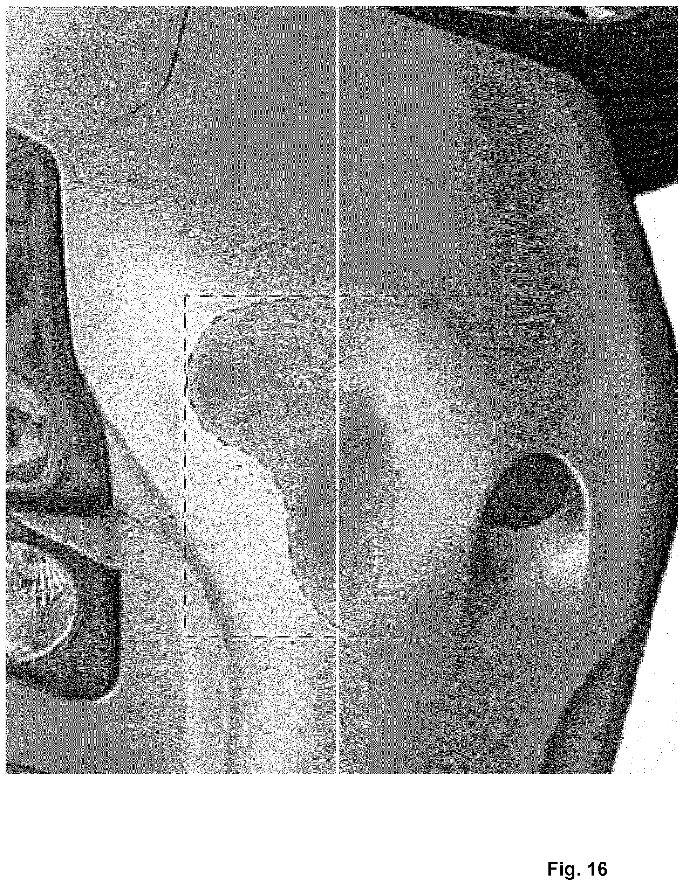

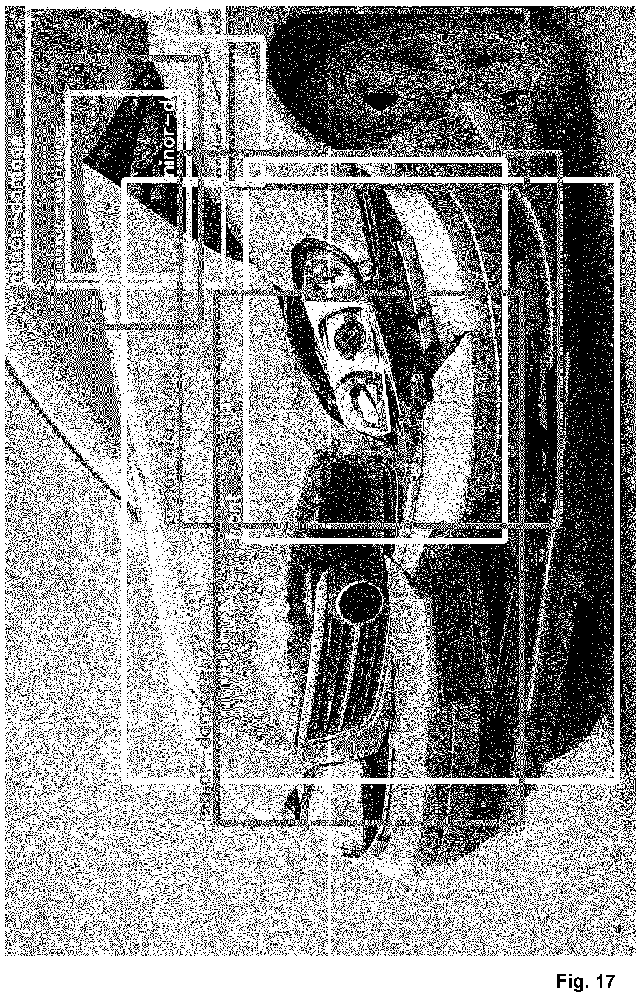

The embodiment variant with the novel automated damage recognition, as described by the figures 10 to 17, has the novel automated damage recognition realized as an integrated part of the fraud detector as described by the figures 1 to 9. However, it is explicitly to be noted, that the automated damage recognition, as described by the figures 10 to 17 can be used independent from the fraud detector as described by the figures 1 to 9, for example as part or stand-alone system for image processing and automated damage recognition and/or classification.

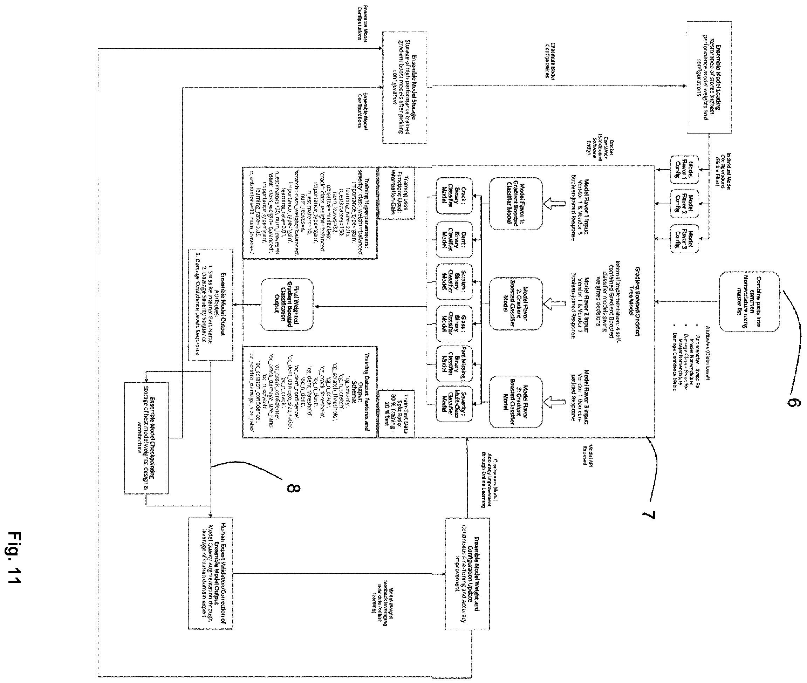

In figures 10 and 11, an example of a recognition method for automated damage identification for vehicle or property damages based on image processing is illustrated. The recognition method can for example be executed with a recognition apparatus comprising a damage data upload section, at least one data storage unit, an image processing section, a damage identification section and a damage information output section.

Figure 10 depicts a first cycle of the inventive recognition method that identifies and determines a damage and damage type at a vehicle like a car for example. One or more images captured of the damage at the vehicle provide image data that is uploaded in an uploading step 1 and provided for further processing by the recognition method according to the invention. The image data is preprocessed in a preprocessing step 2 by associating additional image information to the image data like for example a case identifier, a part number or an image identifier.

In an image processing step the image data is processed by independently applying different visual models to the image data in a first visual processing step 3 and simultaneously in a second visual processing step 4. The first and the second visual processing steps 3 and 4 independently identify damaged parts of the vehicle and damage types at the vehicle. Each visual model provides an independent sub set of damage data corresponding to the identified damaged parts and damage types.

In the first visual processing step 3 the image data is subject of:

- A data cleaning & correction step 3.1

- A data post-processing step 3.2

- A mapping step 3.3 for associating a nomenclature to the identified damage

- A Boolean arithmetic processing step 3.4

- Defining a first sub set of damage data 3.5 comprising information about the damage and the damage type according to the output of the first visual processing step 3.

In the second visual processing step 4 the image data is processed by the second visual model by applying:

- A data cleaning & correction step 4.1,

- A data post-processing step 4.2,

- A mapping step 4.3 for associating a nomenclature to the identified damage, and

- Defining a second sub set of damage data 4.5 comprising information about the damage and the damage type according to the output of the second visual processing step 4.

As discussed above, the second visual model differs from the first visual model. Next, in a combining step 5 the sub sets of damage data 3.5 and 4.5 are automatically combined to define a single domain of damage data 6 that provides enhanced inference accuracy for identifying the damaged parts of the vehicle and the damage type.

As a result damage information based on the single domain of damage data 6 is provided that indicates the damaged parts and damage types of the vehicle. The damage data provides more precise information about the damage and the damage type as each of the visual models could provide by themselves. The recognition method according to the invention provides an ensemble model structure that utilizes a novel processing pipeline by amalgamating outputs of the two visual models. Preferably, the visual models are chosen from visual intelligence models. The ensemble model structure reducers individual model deficiencies and enhances inference accuracy of each model. As a result, the proposed ensemble model structure achieves higher accuracy in detecting damaged parts and corresponding damage types on the vehicle that can for example be used in claim image processing.

The recognition method and apparatus for automated damage identification for vehicle or property damages as shown in Figure 10 can be further enhanced in a second data processing cycle, wherein the system processes the images further using a gradient boosted decision tree model structure as illustrated in Figure 11. In the second cycle the ensemble model structure with the single domain of damage data serves as the basis for the gradient boosted decision tree model structure. In the example shown in Figure 11 the single domain of damage data is subject to classifier models that provide weighted decisions about the damage data. Three independent model flavors 7.1, 7.2 and 7.3 are applied to the single domain of damage data.

In still a further improvement of the recognition method and apparatus for automated damage identification for vehicle or property damages as shown in Figure 10, the ensemble model output is used to improve the machine learning based on a human expert validation/-correction feedback loop 8.

This description and the accompanying drawings that illustrate aspects and embodiments of the present invention should not be taken as limiting the claims defining the protected invention. In other words, while the invention has been illustrated and described in detail in the drawings and foregoing description, such illustration and description are to be considered illustrative or exemplary and not restrictive. Various compositional, structural, and operational changes may be made without departing from the scope of the claims. In some instances, well-known processes, structures and techniques have not been shown in detail in order not to obscure the invention. Thus, it will be understood that changes and modifications may be made by those of ordinary skill within the scope of the following claims.

In the claims the word "comprising" does not exclude other segments or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. Any reference signs in the claims should not be construed as limiting the scope.

The recognition method and apparatus for automated damage identification according to the present invention may be designed as a computer program stored/distributed on a suitable medium, such as an optical storage medium or a solid-state medium supplied together with or as part of other hardware, but may also be distributed in other forms, such as via the internet or other wired or wireless telecommunication systems. In particular, e.g., the computer program can be a data structure product and/or a computer program product stored on a computer readable medium which can have computer executable program code adapted to be executed to implement a specific method such as the method according to the invention.

Reference List

*(A) Automated **fraud** detection*

100    Automated automobile claim fraud detection system / Automated automobile claims fraud detector

102 User device / network-enabled client
1021 Mobile device / smart phone
104 Automated risk-transfer system / Automated insurance system
1041 Claim portal
1042 Optical sensory data/digital images
1043 Automotive sensory measuring data / connected car sensory data
1044 Text data
10441 Incident description data
10442 Damage description data
112 User management unit
114 Claim processing unit
116 Output signaling unit
122 Text processing and recognition unit
124 Image processing and recognition unit
126 Mobile sensor data processing unit
128 Automobile sensor processing unit
130 Incident damage zone and location unit
1301 Damage location zones
1302 Incident geographic location
1303 Incident date
1304 Incident time / incident temporal occurrence
132 Damage zone and FCD collection unit
134 Unusual damage pattern detector
1341 Unusual pattern detection structure
1342 First fraud detection unit
13421 Rule-based fraud identifier
136 Machine-learning-based fraud detection unit
1361 RGB recognition or identification module
1362 RGB values of a digital image
1363 Second fraud detection unit
13631 ML-based fraud identifier
140 Signal assembling unit
1401 Fraud detection signaling output
1402 Automated feedback loop
1403 Verified fraud detection signaling output
138 Data storage / persistence storage
152 Persistence storage / Memory module
154 Data processor
106 Verifier's device
108 Motor vehicle
1081 Automotive sensors / connected vehicle sensors
1082 Telematic device for transmitting automotive sensory data
1083 Damaged objects
110 Data transmission network

*(B) Automated damage recognition and classification*

1 Image data uploading step
2 Image data preprocessing step
3 first visual model processing step

3.1 data cleaning and correction step
3.2 data post processing step
3.3 mapping step
3.4 Boolean arithmetic processing step
3.5 first sub set of data of first visual model

4 second visual model processing step

4.1 data cleaning and correction step
4.2 data post processing step
4.3 mapping step
4.5 second sub set of data of second visual model

5 Combining step
6 single domain of damage data
7 gradient boosted decision tree structure

7.1 first model flavor
7.2 second model flavor
7.3 third model flavor

8 feedback loop

## Claims

1. Automated optical fraud detector (100) for automated detection of damage of at least one damaged object (1083) of a motor vehicle (108) based on digital image data (1042) and for automated detection of fraudulent manipulations of the digital image data (1042), wherein the automated optical fraud detector (100) comprises an electronic claim portal (1041) for capturing one or more digital images (1042), wherein the one or more digital images (1042) at least comprise digital images (1042) associated with one or more damaged objects (1083) of the motor vehicle (108), and wherein the automated optical fraud detector (100) comprises an incident damage zone and location unit (130), wherein the received digital images (1042) are processed by the incident damage zone and location unit (130) determining at least damage location zones (1301, wherein

the automated optical fraud detector (100) comprises a machine-learning based module for processing the one or more images by using an Artificial Intelligence (AI) structure, wherein by means of the machine-learning based module a first set of attributes indicative of damage to one or more zones of the automobile is determined, the first set of attributes comprising details damage to at least one zone of the one or more zones including front center zone, front left zone, front right zone, left zone, right zone, rear left zone, rear right zone, rear center zone, and windshield zone; and wherein a second attribute is determined, the second attribute comprising details the damage to the roof of the automobile, the automated optical fraud detector (100) comprises an unusua damage pattern detector (134) for processing said one or more digital images (1042) for existing image alteration by using an unusual pattern identification structure (1341) and providing a first fraud detection (1342), wherein the unusual damage pattern detector (134) detects unusual damage pattern of the motor vehicle (108) indicating unusual damage pattern to the automobile not happening in at least an accident or natural calamities based on determining by the unusual damage pattern detector (134) whether damages are to one or more zones on opposite sides of the motor vehicle (108) and damage to the roof of the motor vehicle (108), and wherein a rule-based fraud identifier (13421) is set, if an unusual damage pattern is detected by the unusual damage pattern detector (134),
the automated optical fraud detector (100) comprises a machine-learning based fraud detection unit (136), wherein by means of a RGB recognition module (1361) said one or more digital images (1042) are processed for fraud detection using RGB image input, and wherein the RGB values (1362) are used for (i) CNN-based pre-existing damage detection, (ii) parallel CNN-based color matching, and (iii) double JPEG compression (DJCD) detection using custom CNN, providing output of the CNN-based detection,
the automated optical fraud detector (100) comprises a seconc fraud detection unit (1363) having as input the output of the of the CNN-based damage detection triggering a machine-learning-based fraud identifier (13631) based on the output of the CNN-based damage detection, wherein the machine-learning-based fraud identifier (13631) is set, if a fraud is indicated by the second fraud detection unit (1363), and wherein
the automated optical fraud detector (100) comprises a signa assembling unit (140) for generating a fraud signaling output (1401) based upon detecting the rule-based fraud identifier (13421) and the machine-learning-based fraud identifier (13631).

2. Automated optical fraud detector (100) according to claim 1, **characterized in that** the automated optical fraud detector (100) comprises an automated feedback loop (1402) for verifying the generated fraud signaling output (13631) by a human expert, wherein a verified signaling output (1403) is generated fed back to the machine-learning-based fraud detection unit (136) updating machine learning parameters of the CNN-based pre-existing damage detection and/or of the parallel CNN-based color matching and/or of the double JPEG compression detection using custom CNN.

3. An automated optical fraud detection method for automated detection of damage of at least one damaged object (1083) of a motor vehicle (108) based on digital image data (1042) and for automated detection of fraudulent manipulations of the digital image data (1042), wherein an automated optical fraud detector (100) comprises an electronic claim portal (1041) for capturing one or more digital images (1042), wherein the one or more digital images (1042) at least comprise digital images (1042) associated with one or more damaged objects (1083) of the motor vehicle (108), and wherein the automated optical fraud detector (100) comprises an incident damage zone and location unit (130), wherein the received digital images (1042/1043/1044) are processed by the incident damage zone and location unit (130) determining at least damage location zones (1301), performing the steps of:

processing by a machine-learning based module the one or more images by using an Artificial Intelligence (AI) structure, wherein by means of the machine-learning based module a first set of attributes indicative of damage to one or more zones of the automobile is determined, the first set of attributes comprising details damage to at least one zone of the one or more zones including front center zone, front left zone, front right zone, left zone, right zone, rear left zone, rear right zone, rear center zone, and windshield zone; and wherein a second attribute is determined, the second attribute comprising details the damage to the roof of the automobile,

processing by an unusual damage pattern detector (134) of the automated optical fraud detector (100) said one or more digital images (1042) for existing image alteration by using an unusual pattern identification structure (1341) and providing a first fraud detection (1342), wherein the unusual damage pattern detector (134) detects unusual damage pattern of the motor vehicle (108) indicating unusual damage pattern to the automobile not happening in at least an accident or natural calamities based on determining by the unusual damage pattern detector (134) whether damages are to one or more zones on opposite sides of the motor vehicle (108) and damage to the roof of the motor vehicle (108), and wherein a rule-based fraud identifier (13421) is set, if an unusual damage pattern is detected by the unusual damage pattern detector (134),

processing by a machine-learning based fraud detection unit (136) of the automated optical fraud detector (100) by means of a RGB recognition module (1361) said one or more digital images (1042) for fraud detection using RGB image input, and wherein the RGB values (1362) are used for (i) CNN-based pre-existing damage detection, (ii) parallel CNN-based color matching, and (iii) double JPEG compression (DJCD) detection using custom CNN, providing output of the CNN-based detection,

triggering by a second fraud detection unit (1363) of the automated optical fraud detector (100) a machine-learning-based fraud identifier (13631) having as input the output of the of the CNN-based damage detection based on the output of the CNN-based damage detection, wherein the machine-learning-based fraud identifier (13631) is set, if a fraud is indicated by the second fraud detection unit (1363), and generating by a signal assembling unit (140) of the automated optical fraud detector (100) a fraud signaling output (1401) based upon detecting the rule-based fraud identifier (13421) and the machine-learning-based fraud identifier (13631).

4. The automated optical fraud detection method according to claim 3, wherein the one or more servers are configured to process the text data using natural language processing techniques to determine a third set of attributes, the third set of attributes comprising at least one of car location, date of accident, time of accident, and damaged side of automobile and parts.

5. The automated optical fraud detection method according to one of the claims 1 to 4, wherein the automated method comprises the step of processing mobile sensor data to obtain a floating car data (FCD) and/or processing automobile sensor data to obtain on-board units (OBUs) sensors data.

6. The automated optical fraud detection method according to one of the claims 1 to 5, wherein the automated method comprises the steps of processing the FCD to determine a fourth set of attributes, the fourth set of attributes comprising at least one of a passenger's route, trip travel time, estimate traffic state, and global positioning system (GPS) data, and processing the set of attributes, the third attribute, and the fourth set of attributes to obtain a sixth set of attributes, the sixth set of attributes comprising at least one of information of damage to one or more zones of the automobile and FCD attributes, wherein the FCD attributes comprises timestamped geo-localization and speed data.

7. The automated optical fraud detection method according to one of the claims 1 to 6, wherein the automated method comprises the steps of processing OBUs sensors data to obtain a fifth set of attributes, the fifth set attributes comprising at least one of a camera data, a speed data, engine revolutions per minute (RPM) data, rate of fuel consumption, the GPS data, moving direction, impact sensor data, and airbag deployment data and processing the fifth set of attributes to obtain a seventh set of attributes that provide damage information associated with the automobile, and location information, the seventh set of attributes comprising at least one of information of damage to one or more zones of the automobile and the GPS data.

8. The automated optical fraud detection method according to one of the claims 1 to 7, wherein the automated method comprises the steps of performing a first analysis on the first set of attributes, the sixth set of attributes, and the seventh set of attributes to determine whether there are damages to one or more zones on opposite sides of the automobile when the third attribute indicates a damage to the automobile roof, and performing a second analysis on the first set of attributes, the sixth set of attributes, and the seventh set of attributes to determine whether there are damages to one or more zones on opposite sides of the automobile when the third attribute indicates no damage to the automobile roof, and determining the unusual damage pattern based on the first analysis and the second analysis.

9. The automated optical fraud detection method according to one of the claims 1 to 8, wherein the automated method comprises the steps of processing the one or more images by using a convolutional neural network (CNN) structure to (i) process the one or more images to determine a pre-existing damage, perform color matching and a double joint photographic experts group (JPEG) compression, and (ii) determine the indication of the fraud based on determining at least one of pre-existing damage, color matching and double JPEG compression.

10. The automated optical fraud detection method according to one of the claims 1 to 9, wherein the automated method comprises the steps of providing a machine learning (ML) parameter updates to the CNN based on human verification.

11. Automated optical fraud detector (100) according to one of the claims 1 or 2, **characterized in that** the incident damage zone and location unit (130) comprises, for processing the received data (1042/1043/1044) and predicting and/or determining at least damage location zones (1301) and/or incident geographic location (1302) and/or incident date (1303) and/or incident time (1304), a recognition apparatus for automated damage identification for vehicle or property damages based on image processing, comprising a damage data upload section, at least one data storage unit, an image processing section, a damage identification section and a damage information output section,

wherein the upload section is designed to receive one or more images captured of a damage at a vehicle or property in form of digital image data that in an uploading step (1) is uploaded into the at least one data storage unit,
wherein the image processing section is designed to process the image data in an image processing step by independently applying at least two different visual modeling data processing structures (3; 4) to the image data to independently identify damaged parts of the vehicle or property and/or damage types at the vehicle or property and wherein each visual model provides an independent subset of damage data (3.5; 4.5) corresponding to the identified damaged parts and/or damage types,
wherein the damage identification section is designed for automatically combining the subsets of damage data (3.5; 4.5) in a combining step (5) to define a single domain of damage data (6) that provides enhanced inference accuracy for identifying damaged parts of the vehicle or property and/or damage types, and
wherein the damage identification output section is designed to provide damage information based on the single domain of damage data (6).

12. The automated optical fraud detector (100) according to claim 11, **characterized in that** in the combining step (5) the individual sub sets of damage data (3.5; 4.5) are checked for data deficiencies regarding the damaged parts of the vehicle or property, and such data deficiencies in one sub set of damage data (3.5) are compensated by damage data of another sub set of damage data (4.5) to provide enhanced inference accuracy of the single domain of damage data (6).

13. The automated optical fraud detector (100) according to one of the claims 11 or 12, **characterized in that** a data storage unit provides a master list of damage nomenclature and the single domain of damage data (6) representing the identified damaged parts and/or damage types is compared to the master list of damage nomenclature to associate the identified damage to corresponding damage nomenclature.

14. The automated optical fraud detector (100) according to one of the claims 11 to 13, **characterized in**

**that** in the image processing step the image data is further processed by a gradient boosted decision tree model (7).

15. The automated optical fraud detector (100) according to one of the claims 11 to 14, **characterized in that** the damage information is subject to human expert validation and the combining step (5) is augmented by a validation factor corresponding to the expert validation.

16. An automated optical fraud detection method for detecting a fraud in one or more digital images associated with an automobile claim and a related risk-transfer by means of an automated system according to one of the claims 3 to 10, the method comprising as first steps the following steps of automated damage identification for vehicle or property damages based on image processing, wherein

one or more images captured of a damage at a vehicle or property provide image data that that in an uploading step (1) is uploaded into at least one data storage unit,
in an image processing step the image data is processed by independently applying at least two different visual models (3; 4) to the image data to independently identify damaged parts of the vehicle or property and/or damage types at the vehicle or property and wherein each visual model (3; 4) provides an independent subset of damage data (3.5; 4.5) corresponding to the identified damaged parts and/or damage types,
in a combining step (5) the subsets of damage data (3.5; 4.5) are automatically combined to define a single domain of damage data (6) that provides enhanced inference accuracy for identifying damaged parts of the vehicle or property and/or damage types, and
damage information based on the single domain of damage data (6) is provided that indicates damaged parts and/or damage types.

17. The automated optical fraud detection method according to claim 16, wherein in the image processing step the image data is prepared for the processing by the at least two different visual models (3; 4) in that the image data is provided with a case identifier, a damage part number and/or an image identifier.

18. The automated optical fraud detection method according to claim 16 or 17, wherein the image processing step of at least one of the visual models (3; 4) provides steps of damage part identification, damage class identification and/or assigning a damage confidence metric to the damage data.

19. The automated optical fraud detection method according to any of the preceding claims 16 to 17, wherein in the image processing step of at least one of the visual models (3; 4) provides steps of data cleaning and/or data correction including correction of the damage part and/or damage classification.

20. The automated optical fraud detection method according to any of the preceding claims 16 to 19, wherein in the image processing step of at least one of the visual models (3; 4) provides steps of associating the damage data with a predefined damage nomenclature and/or predefined damage classification, wherein the predefined damage nomenclature and/or classification is selected from a master list of damage nomenclature.

21. The automated optical fraud detection method according to any of the preceding claims 16 to 20, wherein in the combining step the single domain of damage data (6) is processed by a gradient boosted decision tree model (7) using at least two self-contained gradient boosted classifier models (7.1; 7.2; 7.3) giving weighted damage data and amalgamating the weighted damage data to provide damage information as ensemble model output.

22. The automated optical fraud detection method according to any of the preceding claims 16 to 21, wherein in the combining step (5) the single domain of damage data (6) and/or the ensemble model output are subject to feedback loop (8) based on human expert validation and a validation factor corresponding to the expert validation is applied to the damage data.

23. The automated optical fraud detection method according to any of the preceding claims 16 to 22, wherein the at least two visual models (3.5; 4.5) used in the image processing step are visual intelligence models as for example [please list at least on example model.

**Patentansprüche**

1. Automatischer optischer Betrugsdetektor (100) zur automatischen Schadenserfassung mindestens eines beschädigten Objekts (1083) eines Kraftfahrzeugs (108), basierend auf digitalen Bilddaten (1042) und zur automatischen Erfassung betrügerischer Manipulationen der digitalen Bilddaten (1042), wobei der automatische optische Betrugsdetektor (100) ein elektronisches Anspruchsportal (1041) zum Aufnehmen eines oder mehrerer digitaler Bilder (1042) umfasst, wobei das eine oder die mehreren digitalen Bilder (1042) mindestens digitale Bilder (1042) umfassen, die einem oder mehreren beschädigten Objekten (1083) des Kraftfahrzeugs (108) zugeordnet sind, und wobei der automatische optische Betrugsdetektor (100) eine Ereignisschadenszonen- und Ortseinheit (130) umfasst, wobei die empfangenen digitalen Bilder (1042) von der Ereignisschadenszonen- und Ortseinheit (130) verarbeitet werden, indem mindestens Schadensortzonen (1301) bestimmt werden, wobei

der automatische optische Betrugsdetektor (100) ein auf maschinellem Lernen basierendes Modul zum Verarbeiten des einen oder der mehreren Bilder unter Verwendung einer Struktur mit künstlicher Intelligenz (KI-Struktur) umfasst, wobei mittels des auf maschinellem Lernen basierenden Moduls ein erster Satz von Attributen, der Schaden an einer oder mehreren Zonen des Kraftfahrzeugs angibt, bestimmt wird, wobei der erste Satz von Attributen Schadendetails an mindestens einer Zone der einen oder mehreren Zonen umfasst, die die vordere mittlere Zone, vordere linke Zone, vordere rechte Zone, linke Zone, rechte Zone, hintere linke Zone, hintere rechte Zone, hintere mittlere Zone und Windschutzscheibenzone beinhalten, und wobei ein zweites Attribut bestimmt wird, wobei das zweite Attribut Details des Schadens an dem Dach des Kraftfahrzeugs umfasst,

wobei der automatische optische Betrugsdetektor (100) einen Detektor (134) für ungewöhnliches Schadensmuster umfasst, um das eine oder die mehreren digitalen Bilder (1042) auf bestehende Bildabänderung unter Verwendung einer Identifikationsstruktur (1341) für ungewöhnliches Muster verwendet und eine erste Betrugserfassung (1342) bereitstellt, wobei der Detektor (134) für ungewöhnliches Schadensmuster ein ungewöhnliches Schadensmuster des Kraftfahrzeugs (108) erfasst, das ein ungewöhnliches Schadensmuster an dem Kraftwagen angibt, das zumindest nicht bei einem Unfall oder einem Naturereignis auftritt, basierend auf dem Bestimmen durch den Detektor (134) für ungewöhnliches Schadensmuster, ob Schäden an einer oder mehreren Zonen an entgegengesetzten Seiten des Kraftfahrzeugs (108) vorliegen, und wobei eine regelbasierte Betrugskennung (13421) gesetzt wird, wenn ein ungewöhnliches Schadensmuster von dem Detektor (134) für ungewöhnliches Schadensmuster erfasst wird,

der automatische optische Betrugsdetektor (100) eine auf maschinellem Lernen basierende Betrugserfassungseinheit (136) umfasst, wobei mittels eines RGB-Erkennungsmoduls (1361) das eine oder die mehreren digitalen Bilder (1042) auf Betrugserfassung unter Verwendung von RGB-Bildeingabe verarbeitet werden, und wobei die RGB-Werte (1362) für (i) CNN-basierte vorab bestehende Schadenserfassung, (ii) parallele CNN-basierte Farbabstimmung und (iii) doppelte JPEG-Kompressionserfassung (DJCD-Erfassung) unter Verwendung von kundenspezifischem CNN verwendet werden, so dass Ausgaben der CNN-basierten Erfassung bereitgestellt werden,

der automatische optische Betrugsdetektor (100) eine zweite Betrugserfassungseinheit (1363) umfasst, die als Eingabe die Ausgabe der CNN-basierten Schadenserfassung aufweist, die eine auf maschinellem Lernen basierende Betrugskennung (13631) basierend auf der Ausgabe der CNN-basierten Schadenserfassung auslöst, wobei die auf maschinellem Lernen basierende Betrugskennung (13631) gesetzt wird, wenn von der zweiten Betrugserfassungseinheit (1363) ein Betrug angegeben wird, und

der automatische optische Betrugsdetektor (100) eine Signalzusammenführungseinheit (140) zum Erzeugen einer Betrugssignalisierungsausgabe (1401) basierend auf dem Erfassen der regelbasierten Betrugskennung (13421) und der auf maschinellem Lernen basierenden Betrugskennung (13631) umfasst.

**2.** Automatischer optischer Betrugsdetektor (100) nach Anspruch 1,
**dadurch gekennzeichnet, dass** der automatische optische Betrugsdetektor (100) eine automatische Rückkopplungsschleife (1402) zum Verifizieren der erzeugten Betrugssignalisierungsausgabe (13631) durch einen menschlichen Experten umfasst, wobei eine verifizierte Signalisierungsausgabe (1403) erzeugt wird, an die auf maschinellem Lernen basierende Betrugserfassungseinheit (136) zurückgereicht wird, die Parameter zum maschinellen Lernen der CNN-basierten vorab bestehenden Schadenserfassung und/oder der parallelen CNN-basierten Farbabstimmung und/oder der Erfassung von doppelter JPEG-Kompression unter Verwendung von benutzerdefiniertem CNN aktualisiert werden.

**3.** Verfahren zur automatischen optischen Betrugserfassung zur automatischen Schadenserfassung mindestens eines beschädigten Objekts (1083) eines Kraftfahrzeugs (108), basierend auf digitalen Bilddaten (1042) und zur automatischen Erfassung betrügerischer Manipulationen der digitalen Bilddaten (1042), wobei ein automatischer optischer Betrugsdetektor (100) ein elektronisches Anspruchsportal (1041) zum Aufnehmen eines oder mehrerer digitaler Bilder (1042) umfasst, wobei das eine oder die mehreren digitalen Bilder (1042) mindestens digitale Bilder (1042) umfassen, die einem oder mehreren beschädigten Objekten (1083) des Kraftfahrzeugs (108) zugeordnet sind,

und wobei der automatische optische Betrugsdetektor (100) eine Ereignisschadenszonen- und Ortseinheit (130) umfasst, wobei die empfangenen digitalen Bilder (1042/1043/1044) von der Ereignisschadenszonen- und Ortseinheit (130) verarbeitet werden, indem mindestens Schadensortzonen (1301) bestimmt werden, indem die folgenden Schritte durchgeführt werden:

Verarbeiten durch ein auf maschinellem Lernen basierendes Modul des einen oder der mehreren Bilder unter Verwendung einer Struktur mit künstlicher Intelligenz (KI-Struktur), wobei mittels des auf maschinellem Lernen basierenden Moduls ein erster Satz von Attributen, die Schaden an einer oder mehreren Zonen des Kraftwagens angeben, bestimmt wird, wobei der erste Satz von Attributen Schadendetails an mindestens einer Zone der einen oder mehreren Zonen umfasst, die die vordere mittlere Zone, vordere linke Zone, vordere rechte Zone, linke Zone, rechte Zone, hintere linke Zone, hintere rechte Zone, hintere mittlere Zone und Windschutzscheibenzone beinhalten, und wobei ein zweites Attribut bestimmt ist, wobei das zweite Attribut Details des Schadens an dem Dach des Kraftwagens umfasst,

Verarbeiten durch einen Detektor (134) für ungewöhnliche Schadensmuster des automatischen optischen Betrugsdetektors (100) des einen oder der mehreren digitalen Bilder (1042) auf bestehende Bildabänderung unter Verwendung einer Identifikationsstruktur (1341) für ungewöhnliches Muster und Bereitstellen einer ersten Betrugserfassung (1342), wobei der Detektor (134) für ungewöhnliches Schadensmuster ein ungewöhnliches Schadensmuster des Kraftfahrzeugs (108) erfasst, das ein ungewöhnliches Schadensmuster an dem Kraftwagen angibt, das nicht bei mindestens einem Unfall oder einem Naturereignis auftritt, basierend auf dem Bestimmen durch den Detektor (134) für ungewöhnliches Schadensmuster, ob Schäden an einer oder mehreren Zonen an entgegengesetzten Seiten des Kraftfahrzeugs (108) und Schaden an dem Dach des Kraftfahrzeugs (108) vorliegen, und wobei eine regelbasierte Betrugskennung (13421) gesetzt wird, wenn ein ungewöhnliches Schadensmuster von dem Detektor (134) für ungewöhnliches Schadensmuster erfasst wird,

Verarbeiten durch eine auf maschinellem Lernen basierende Betrugserfassungseinheit (136) des automatischen optischen Betrugsdetektors (100) mittels eines RGB-Erkennungsmoduls (1361) des einen oder der mehreren digitalen Bilder (1042) auf Betrugserfassung unter Verwendung von RGB-Bildeingabe, und wobei die RGB-Werte (1362) für (i) CNN-basierte vorab bestehende Schadenserfassung, (ii) parallele CNN-basierte Farbabstimmung und (iii) doppelte JPEG-Kompressionserfassung (DJCD-Erfassung) unter Verwendung von benutzerspezifischem CNN verwendet werden, wobei Ausgabe der CNN-basierten Erfassung bereitgestellt wird, Auslösen durch eine zweite Betrugserfassungseinheit (1363) des automatischen optischen Betrugsdetektors (100) einer auf maschinellem Lernen basierenden Betrugskennung (13631), die als Eingabe die Ausgabe der auf der CNN-basierten Schadenserfassung aufweist, basierend auf der Ausgabe der CNN-basierten Schadenserfassung, wobei die auf maschinellem Lernen basierende Betrugskennung (13631) gesetzt wird, wenn von der zweiten Betrugserfassungseinheit (1363) ein Betrug angegeben wird, und

Erzeugen durch eine Signalzusammenführungseinheit (140) des automatischen optischen Betrugsdetektors (100) einer Betrugssignalisierungsausgabe (1401) basierend auf dem Erfassen der regelbasierten Betrugskennung (13421) und der auf maschinellem Lernen basierenden Betrugskennung (13631).

4. Verfahren zur automatischen optischen Betrugserfassung nach Anspruch 3,
wobei der eine oder die mehreren Server dazu konfiguriert sind, Textdaten unter Verwendung von Verarbeitungstechniken für natürliche Sprache zu verarbeiten, um einen dritten Satz von Attributen zu bestimmen, wobei der dritte Satz von Attributen mindestens eines eines Orts des Autos, eines Unfalldatums, einer Unfallzeit und beschädigten Seite des Kraftwagens und beschädigten Teile umfasst.

5. Verfahren zur automatischen optischen Betrugserfassung nach einem der Ansprüche 1 bis 4, wobei das automatische Verfahren den Schritt des Verarbeitens der mobilen Sensordaten zum Gewinnen von Floating-Car-Data (FCD) und/oder Verarbeiten von Kraftwagensensordaten zum Gewinnen von Sensordaten von fahrzeugeigenen Einheiten (OBUs) umfasst.

6. Verfahren zur automatischen Betrugserfassung nach einem der Ansprüche 1 bis 5, wobei das automatische Verfahren die Schritte des Verarbeitens der FCD umfasst, um einen vierten Satz von Attributen zu bestimmen, wobei der vierte Satz von Attributen mindestens eines von einer Insassenfahrtroute, Fahrzeit, geschätztem Verkehrszustand und Global-Positioning-System-Daten (GPS-Daten) umfasst, und Verarbeiten des Satzes von Attributen, des dritten Attributs und des vierten Satzes von Attributen, um einen sechsten Satz von Attributen zu gewinnen, wobei der sechste Satz von Attributen mindestens eines von Informationen über Schaden an einer oder mehreren Zonen des Kraftwagens und FCD-Attributen umfasst, wobei die FCD-Attribute zeitgestempelte Geolokalisierungs- und Geschwindigkeitsdaten umfassen.

7. Verfahren zur automatischen Betrugserfassung nach einem der Ansprüche 1 bis 6, wobei das automatische Verfahren die Schritte des Verarbeitens von OBUs-Sensordaten zum Gewinnen eines fünften Satzes von Attributen umfasst, der fünfte Satz von Attributen mindestens eines eines Kameradatums, eines Geschwindigkeitsdatums, Daten für Umdrehungen pro Minute (RPM-Daten), Kraftstoffverbrauchsrate, der GPS-Daten, der Bewegungsrichtung, Aufprallsensordaten und Airbag-Auslösungsdaten umfasst, und Verarbeiten des fünften Satzes von Attributen zum Erhalten eines siebten Satzes von Attributen, die Schadensinformationen bereitstellen, die dem Kraftwagen zugeordnet sind, und Ortsinformationen, wobei der siebte Satz von Attributen mindestens eines von Informationen von Schaden an einer oder mehreren Zonen des Kraftwagens und die GPS-Daten umfasst.

8. Verfahren zur automatischen optischen Betrugserfassung nach einem der Ansprüche 1 bis 7, wobei das automatische Verfahren die Schritte des Durchführens einer ersten Analyse an dem ersten Satz von Attributen, dem sechsten Satz von Attributen und dem siebten Satz von Attributen umfasst, um zu bestimmen, ob Schäden an einer oder mehreren Zonen auf entgegengesetzten Seiten des Kraftwagens vorliegen, wenn das dritte Attribut einen Schaden an dem Kraftwagendach angibt, und Durchführen einer zweiten Analyse an dem ersten Satz von Attributen, dem sechsten Satz von Attributen und dem siebten Satz von Attributen, um zu bestimmen, ob Schäden an einer oder mehreren Zonen auf entgegengesetzten Seiten des Kraftwagens vorliegen, wenn das dritte Attribut keinen Schaden an dem Kraftwagendach angibt, und Bestimmen des ungewöhnlichen Schadensmusters basierend auf der ersten Analyse und der zweiten Analyse.

9. Verfahren zur automatischen optischen Betrugserfassung nach einem der Ansprüche 1 bis 8, wobei das automatische Verfahren die Schritte des Verarbeitens des einen oder der mehreren Bilder unter Verwendung einer faltungsneuronalen Netzstruktur (CNN-Struktur) umfasst, um (i) das eine oder die mehreren Bilder zu verarbeiten, um einen vorab bestehenden Schaden zu bestimmen, Farbabstimmung und eine doppelte Joint-Photographic-Experts-Group-Kompression (JPEG-Kompression) durchzuführen und (ii) die Angabe des Betrugs basierend auf dem Bestimmen mindestens eines von vorab bestehendem Schaden, Farbabstimmung und doppelter-JPEG-Kompression zu bestimmen.

10. Verfahren zur automatischen optischen Betrugserfassung nach einem der Ansprüche 1 bis 9, wobei das automatische Verfahren die Schritte des Bereitstellens von Parameteraktualisierungen für maschinelles Lernen (ML-Parameteraktualisierungen) basierend auf menschlicher Verifizierung umfasst.

11. Automatischer optischer Betrugsdetektor (100) nach einem der Ansprüche 1 oder 2, **dadurch gekennzeichnet, dass** die Ereignisschadenszonen- und Ortseinheit (130) zum Verarbeiten der empfangenen Daten (1042/1043/1044) und Vorhersagen und/oder Bestimmen mindestens von Schadensortzonen (1301) und/oder geographischem Ereignisort (1302) und/oder Ereignisdatum (1303) und/oder Ereigniszeit (1304) eine Erkennungseinrichtung für automatische Schadensidentifikation für Fahrzeug- oder Sachgüterschäden basierend auf Bildverarbeitung umfasst, die einen Schadensdaten-Upload-Abschnitt, mindestens eine Datenspeichereinheit, einen Bildverarbeitungsabschnitt, einen Schadensidentifikationsabschnitt und einen Schadensinformationsausgabeabschnitt umfasst,

wobei der Upload-Abschnitt dazu konzipiert ist, ein oder mehrere Bilder, die von einem Schaden an einem Fahrzeug oder an Sachgütern aufgenommen werden, in Form von digitalen Bilddaten zu empfangen, die in einem Upload-Schritt (1) in die mindestens eine Datenspeichereinheit hochgeladen werden,
wobei der Bildverarbeitungsabschnitt dazu konzipiert ist, die Bilddaten in einem Bildverarbeitungsschritt durch unabhängiges Anwenden mindestens zweier unterschiedlicher visueller Modellierungs-Datenverarbeitungsstrukturen (3; 4) in Bilddaten zu verarbeiten, um unabhängig beschädigte Teile des Fahrzeugs oder von Sachgütern und/oder Schadenstypen an dem Fahrzeug oder an Sachgütern zu identifizieren, und wobei jedes visuelle Modell einen unabhängigen Teilsatz von Schadensdaten (3.5; 4.5) bereitstellt, die den identifizierten beschädigten Teilen und/oder Schadenstypen entsprechen,
wobei der Schadensidentifikationsabschnitt zum automatischen Kombinieren der Teilsätze von Schadensdaten (3.5; 4.5) in einem Kombinationsschritt (5) konzipiert ist, um eine einzige Schadensdatendomäne (6) zu definieren, die verbesserte Inferenzgenauigkeit zum Identifizieren beschädigter Teile des Fahrzeugs oder von Sachgütern und/oder von Schadenstypen bereitstellt, und
wobei der Schadensidentifikationsausgabeabschnitt dazu konzipiert ist, Schadensinformationen basierend auf der einzigen Schadensdatendomäne (6) bereitzustellen.

12. Automatischer optischer Betrugsdetektor (100) nach Anspruch 11, **dadurch gekennzeichnet, dass** in dem Kombinationsschritt (5) die individuellen Teilsätze von Schadensdaten (3.5; 4.5) auf Datenunzulänglichkeiten bezüglich der beschädigten Teile des Fahrzeugs oder von Sachgütern überprüft werden, und solche Datenunzulänglichkeiten in einem Teilsatz von Schadensdaten (3.5) durch Schadensdaten eines anderen Teilsatzes von Schadensdaten (4.5) kompensiert werden, um verbesserte Inferenzgenauigkeit der einzigen Schadensdatendomäne (6) bereitzustellen.

13. Automatischer optischer Betrugsdetektor (100) nach einem der Ansprüche 11 oder 12, **dadurch gekennzeichnet, dass** eine Datenspeichereinheit eine Schadensnomenklatur-Masterliste bereitstellt und die einzige Schadensdatendomäne (6), die die identifizierten beschädigten Teile und/oder Schadenstypen darstellt, mit der Schadensnomenklatur-Masterliste verglichen wird, um den identifizierten Schaden der entsprechenden Schadensnomenklatur zuzuordnen.

14. Automatischer optischer Betrugsdetektor (100) nach einem der Ansprüche 11 bis 13, **dadurch gekennzeichnet, dass** in dem Bildverarbeitungsschritt die Bilddaten durch ein Gradient-Boosted-Decision-Tree-Modell (7) weiter verarbeitet werden.

15. Automatischer optischer Betrugsdetektor (100) nach einem der Ansprüche 11 bis 14, **dadurch gekennzeichnet, dass** die Schadensinformationen einer Validierung durch menschlichen Experten unterzogen werden und der Kombinationsschritt (5) durch einen Validierungsfaktor, der der Expertenvalidierung entspricht, erweitert wird.

16. Verfahren zur automatischen optischen Betrugserfassung zum Erfassen eines Betrugs in einem oder mehreren digitalen Bildern, die einem Kraftwagenanspruch zugeordnet sind, und einem dazu gehörenden Risikotransfer mittels eines automatischen Systems nach einem der Ansprüche 3 bis 10, wobei das Verfahren als erste Schritte die folgenden Schritte zur automatischen Schadensidentifikation für Fahrzeug- oder Sachgüterschäden basierend auf Bildverarbeitungen umfasst, wobei

ein oder mehrere Bilder, die von einem Schaden an einem Fahrzeug oder an Sachgütern aufgenommen werden, Bilddaten bereitstellen, die in einem Upload-Schritt (1) in mindestens eine Datenspeichereinheit hochgeladen werden,

in einem Bildverarbeitungsschritt die Bilddaten durch unabhängiges Anwenden mindestens zweier unterschiedlicher visueller Modelle (3; 4) in Bilddaten verarbeitet werden, um unabhängig beschädigte Teile des Fahrzeugs oder von Sachgütern und/oder Schadenstypen an dem Fahrzeug oder an Sachgütern zu identifizieren, und wobei jedes visuelle Modell (3; 4) einen unabhängigen Teilsatz von Schadensdaten (3.5; 4.5) bereitstellt, die den identifizierten beschädigten Teilen und/oder Schadenstypen entsprechen;

in einem Kombinationsschritt (5) die Teilsätze von Schadensdaten (3.5; 4.5) automatisch kombiniert werden, um eine einzige Schadensdatendomäne (6) zu definieren, die verbesserte Inferenzgenauigkeit zum Identifizieren beschädigter Teile des Fahrzeugs oder von Sachgütern und/oder von Schadenstypen bereitstellt, und Schadensinformationen basierend auf der einzigen Schadensdatendomäne (6) bereitgestellt werden, die beschädigte Teile und/oder Schadenstypen angeben.

17. Verfahren zur automatischen optischen Betrugserfassung nach Anspruch 16, wobei in dem Bildverarbeitungsschritt die Bilddaten für das Verarbeiten durch die mindestens zwei unterschiedlichen visuellen Modelle (3; 4) dadurch aufbereitet werden, dass die Bilddaten mit einer Fallkennung, einer Schadteilnummer und/oder einer Bildkennung versehen werden.

18. Verfahren zur automatischen optischen Betrugserfassung nach Anspruch 16 oder 17, wobei der Bildverarbeitungsschritt mindestens eines der visuellen Modelle (3; 4) Schadteilidentifikationsschritte, Schadensklassenidentifikation und/oder Zuweisen einer Schadenskonfidenzmetrik an die Schadensdaten bereitstellt.

19. Verfahren zur automatischen optischen Betrugserfassung nach einem der vorstehenden Ansprüche 16 bis 17, wobei in dem Bildverarbeitungsschritt mindestens eines der visuellen Modelle (3; 4) Schritte zur Datenbereinigung und/oder Datenkorrektur bereitstellt, die Korrektur des Schadteils und/oder der Schadensklassifizierung beinhalten.

20. Verfahren zur automatischen optischen Betrugserfassung nach einem der vorstehenden Ansprüche 16 bis 19, wobei in dem Bildverarbeitungsschritt mindestens eines der visuellen Modelle (3; 4) Schritte zum Zuordnen der Schadensdaten zu einer vordefinierten Schadensnomenklatur und/oder vordefinierten Schadensklassifizierung bereitstellt, wobei die vordefinierte Schadensnomenklatur und/oder -klassifizierung aus einer Schadensnomenklatur-Masterliste ausgewählt wird.

21. Verfahren zur automatischen optischen Betrugserfassung nach einem der vorstehenden Ansprüche 16 bis 20, wobei der Kombinationsschritt der einzigen Schadensdatendomäne (6) durch ein Gradient-Boosted-Decision-Tree-Modell (7) unter Verwendung von mindestens zwei eigenständigen Gradient-Boosted-Klassifizierermodellen (7.1; 7.2; 7.3) verarbeitet wird, die gewichtete Schadensdaten geben und die gewichteten Schadensdaten vereinigen, um Schadensinformationen als Ensemble-Modell-Ausgabe bereitzustellen.

22. Verfahren zur automatischen optischen Betrugserfassung nach einem der vorstehenden Ansprüche 16 bis 21, wobei in dem Kombinationsschritt (5) die einzige Schadensdatendomäne (6) und/oder eine Ensemble-Modell-Ausgabe einer Rückkopplungsschleife (8) basierend auf Validierung durch einen menschlichen Experten und einen Validierungsfaktor, der der Expertenvalidierung entspricht, unterzogen werden, an die Schadensdaten angewendet werden.

23. Verfahren zur automatischen optischen Betrugserfassung nach einem der vorstehenden Ansprüche 16 bis 22, wobei die mindestens zwei visuellen Modelle (3.5; 4.5), die in dem Bildverarbeitungsschritt verwendet werden, Modelle visueller Intelligenz sind, wie beispielsweise [bitte mindestens ein beispielhaftes Modell angeben].

**Revendications**

1. Détecteur de fraude optique automatisé (100) pour la détection automatisée des dommages subis par au moins un objet endommagé (1083) d'un véhicule automobile (108) sur la base de données d'images numériques (1042) et pour la détection automatisée des manipulations frauduleuses des données d'images numériques (1042), dans lequel le détecteur de fraude optique automatisé (100) comprend un portail de réclamation électronique (1041) pour la capture d'une ou plusieurs images numériques (1042), dans lequel une ou plusieurs images numériques (1042) comprennent au moins des images numériques (1042) associées à un ou plusieurs objets endommagés (1083) du véhicule automobile (108) et dans lequel le détecteur de fraude optique automatisé (100) comprend une unité de localisation et de zone endommagée d'incident (130), dans lequel les images numériques reçues (1042) sont traitées par l'unité de localisation et de zone endommagée d'incident (130) déterminant au moins des zones de localisation des dommages (1301), dans lequel

le détecteur de fraude optique automatisé (100) comprend un module d'apprentissage automatique pour traiter une ou plusieurs images à l'aide d'une structure d'intelligence artificielle (IA), dans lequel au moyen du module d'apprentissage automatique un premier ensemble d'attributs indiquant des dommages sur une ou plusieurs zones de l'automobile est déterminé, le premier ensemble d'attributs détaille les dommages sur au moins une zone parmi une ou plusieurs zones comprenant : zone centrale avant, zone avant gauche, zone avant droite, zone gauche, zone droite, zone arrière gauche, zone arrière droite, zone centrale arrière et zone de pare-brise ; et dans lequel un deuxième attribut est également déterminé, détaillant les dommages sur le toit de l'automobile,
le détecteur de fraude optique automatisé (100) comprend un détecteur de motifs de dommages inhabituels (134) pour traiter lesdites une ou plusieurs images numériques (1042) afin de détecter toute altération d'image existante à l'aide d'une structure d'identification de motifs inhabituels (1341) et fournissant une première détection de fraude (1342), dans lequel le détecteur de motifs de dommages inhabituels (134) détecte les motifs de dommages inhabituels de l'automobile (108), indiquant des motifs de dommages inhabituels survenus sur l'automobile, ne résultant pas d'au moins un accident ou une catastrophe naturelle, sur la base de la détermination par le détecteur de motifs de dommages inhabituels (134) si les dommages se situent sur une ou plusieurs zones sur des côtés opposés de l'automobile (108) et des dommages au toit de l'automobile (108) et dans lequel un identificateur de fraude basé sur des règles (13421) est défini, si un motif de dommages inhabituel est détecté par le détecteur de motifs de dommages inhabituels (134),
le détecteur de fraude optique automatisé (100) comprend une unité de détection de fraude basée sur l'apprentissage automatique (136), dans lequel, au moyen d'un module de reconnaissance RGB (1361), lesdites une ou plusieurs images numériques (1042) sont traitées pour la détection de fraude à l'aide d'une entrée d'image RGB et dans lequel les valeurs RGB (1362) sont utilisées pour (i) la détection de dommages préexistants basée sur un CNN, (ii) la correspondance des couleurs parallèle basée sur un CNN et (iii) la détection de compression JPEG double (DJCD) à l'aide d'un CNN personnalisé, fournissant la sortie de la détection basée sur un CNN,
le détecteur de fraude optique automatisé (100) comprend une deuxième unité de détection de fraude (1363) ayant en entrée la sortie de la détection de dommages basée sur un CNN déclenchant un identificateur de fraude basé sur l'apprentissage automatique (13631) basé sur la sortie de la détection de dommages basée sur un CNN, dans lequel l'identificateur de fraude basé sur l'apprentissage automatique (13631) est défini, si une fraude est indiquée par la deuxième unité de détection de fraude (1363), et

le détecteur de fraude optique automatisé (100) comprend une unité de signalisation (140) pour générer une sortie de signalisation de fraude (1401) sur la base de la détection de l'identificateur de fraude basé sur des règles (13421) et l'identificateur de fraude basé sur l'apprentissage automatique (13631).

2. Détecteur de fraude optique automatisé (100) selon la revendication 1, **caractérisé en ce que** le détecteur de fraude optique automatisé (100) comprend une boucle de rétroaction automatisée (1402) permettant à un expert humain de vérifier le signal de fraude généré (13631), dans lequel un signal vérifié (1403) est généré et renvoyé à l'unité de détection de fraude basée sur l'apprentissage automatique (136) en mettant à jour les paramètres de détection des dommages préexistants basés sur un CNN et/ou de correspondance des couleurs basée sur un CNN parallèle et/ou de détection de la double compression JPEG à l'aide d'un CNN personnalisé.

3. Procédé automatisé de détection de fraude optique pour la détection automatisée des dommages subis par au moins un objet endommagé (1083) d'un véhicule automobile (108) sur la base de données d'image numérique (1042) et pour la détection automatisée des manipulations frauduleuses des données d'image numérique (1042), dans lequel un détecteur de fraude optique automatisé (100) comprend un portail de réclamation électronique (1041) pour la capture d'une ou plusieurs images numériques (1042), dans lequel une ou plusieurs images numériques (1042) comprennent au moins des images numériques (1042) associées à un ou plusieurs objets endommagés (1083) de l'automobile (108) et dans lequel le détecteur de fraude optique automatisé (100) comprend une unité de localisation et de zone endommagée d'incident (130), dans lequel les images numériques reçues (1042/1043/1044) sont traitées par l'unité de localisation et de zone endommagée d'incident (130) en déterminant au moins des zones de localisation des dommages (1301), en effectuant les étapes suivantes :

le traitement par un module d'apprentissage automatique d'une ou plusieurs images à l'aide d'une structure d'intelligence artificielle (IA), dans lequel au moyen du module d'apprentissage automatique un premier ensemble d'attributs indiquant des dommages sur une ou plusieurs zones de l'automobile est déterminé, le premier ensemble d'attributs détaille les dommages sur au moins une zone parmi une ou plusieurs zones comprenant : zone centrale avant, zone avant gauche, zone avant droite, zone gauche, zone droite, zone arrière gauche, zone arrière droite, zone centrale arrière et zone de pare-brise ; et dans lequel un deuxième attribut est également déterminé, détaillant les dommages sur le toit de l'automobile,

le traitement par un détecteur de motifs de dommages inhabituels (134) du détecteur de fraude optique automatisé (100) desdites une ou plusieurs images numériques (1042) afin de détecter toute altération d'image existante à l'aide d'une structure d'identification de motifs inhabituels (1341) et fournissant une première détection de fraude (1342), dans lequel le détecteur de motifs de dommages inhabituels (134) détecte les motifs de dommages inhabituels de l'automobile (108), indiquant des motifs de dommages inhabituels survenus sur l'automobile, ne résultant pas d'au moins un accident ou une catastrophe naturelle, sur la base de la détermination par le détecteur de motifs de dommages inhabituels (134) si les dommages se situent sur une ou plusieurs zones sur des côtés opposés de l'automobile (108) et des dommages au toit de l'automobile (108) et dans lequel un identificateur de fraude basé sur des règles (13421) est défini, si un motif de dommages inhabituel est détecté par le détecteur de motifs de dommages inhabituels (134),

le traitement par une unité de détection de fraude basée sur l'apprentissage automatique (136) du détecteur de fraude optique automatisé (100) au moyen d'un module de reconnaissance RGB (1361) desdites une ou plusieurs images numériques (1042) pour la détection de fraude à l'aide d'une entrée d'image RGB et dans lequel les valeurs RGB (1362) sont utilisées pour (i) la détection de dommages préexistants basée sur un CNN, (ii) la correspondance des couleurs parallèle basée sur un CNN et (iii) la détection de compression JPEG double (DJCD) à l'aide d'un CNN personnalisé, fournissant la sortie de la détection basée sur un CNN,

le déclenchement par une deuxième unité de détection de fraude (1363) du détecteur de fraude optique automatisé (100) d'un identificateur de fraude basé sur l'apprentissage automatique (13631) ayant en entrée la sortie de la détection de dommages basée sur un CNN basé sur la sortie de la détection de dommages basée sur un CNN, dans lequel l'identificateur de fraude basé sur l'apprentissage automatique (13631) est défini, si une fraude est indiquée par la deuxième unité de détection de fraude (1363), et

la génération par une unité d'assemblage de signaux (140) du détecteur de fraude optique automatisé (100) d'une sortie de signalisation de fraude (1401) sur la base de la détection de l'identificateur de fraude basé sur des règles (13421) et l'identificateur de fraude basé sur l'apprentissage automatique (13631).

4. Procédé automatisé de détection de fraude optique selon la revendication 3, dans lequel un ou plusieurs serveurs sont configurés pour traiter les données textuelles à l'aide de techniques de traitement automatique du langage naturel afin de déterminer un troisième ensemble d'attributs, le troisième ensemble comprenant au moins un des éléments suivants : localisation de l'automobile, date de l'accident, heure de l'accident et côté endommagé de l'automobile et parties concernées.

5. Procédé automatisé de détection de fraude optique selon une des revendications 1 à 4, dans lequel le procédé automatisé comprend l'étape de traitement des données de capteurs mobiles pour obtenir des données de véhicule flottant (FCD) et/ou le traitement des données de capteurs automobiles pour obtenir des données de capteurs d'unités embarquées (OBUs).

6. Procédé automatisé de détection de fraude optique selon une des revendications 1 à 5, dans lequel le procédé automatisé comprend les étapes de traitement du FCD pour déterminer un quatrième ensemble d'attributs, le quatrième ensemble d'attributs comprenant au moins un élément parmi les suivants : itinéraire du passager, durée du trajet, estimation de l'état du trafic et données du système de positionnement global (GPS) et de traitement de l'ensemble d'attributs, du troisième attribut et du quatrième ensemble d'attributs pour obtenir un sixième ensemble d'attributs, le sixième ensemble comprenant au moins une information relative à des dommages sur une ou plusieurs zones de l'automobile et des attributs du FCD, dans lequel les attributs du FCD comprennent des données de vitesse et de géolocalisation horodatées.

7. Procédé automatisé de détection de fraude optique selon une des revendications 1 à 6, dans lequel le procédé automatisé comprend les étapes de traitement des données des capteurs OBUs pour obtenir un cinquième ensemble d'attributs, le cinquième ensemble d'attributs comprenant au moins un des éléments suivants : données de caméra, données de vitesse, données de régime du moteur (tours par minute, tr/min), taux de consommation de carburant, données GPS, données de mouvement, données de capteur d'impact et données de déploiement d'airbag et de traitement du cinquième ensemble d'attributs pour obtenir un septième ensemble d'attributs qui fournit des informations de dommages associées à l'automobile et des informations de localisation, le septième ensemble d'attributs comprenant au moins une des informations de dommages sur un ou plusieurs zones de l'automobile et des données GPS.

8. Procédé automatisé de détection de fraude optique selon une des revendications 1 à 7, dans lequel le procédé automatisé comprend les étapes de réalisation d'une première analyse sur le premier ensemble d'attributs, le sixième ensemble d'attributs et le septième ensemble d'attributs afin de déterminer la présence de dommages sur une ou plusieurs zones sur des côtés opposés de l'automobile lorsque le troisième attribut indique un dommage au toit de l'automobile et de réalisation d'une deuxième analyse sur le premier ensemble d'attributs, le sixième ensemble d'attributs et le septième ensemble d'attributs afin de déterminer la présence de dommages sur une ou plusieurs zones sur des côtés opposés de l'automobile lorsque le troisième attribut n'indique aucun dommage au toit de l'automobile et la détermination du type de dommage inhabituel sur la base de la première analyse et de la deuxième analyse.

9. Procédé automatisé de détection de fraude optique selon une des revendications 1 à 8, **caractérisé en ce que** le procédé automatisé comprend les étapes de traitement d'une ou plusieurs images à l'aide d'une structure de réseau neuronal convolutif (CNN) afin de : (i) traiter une ou plusieurs images afin de déterminer la présence d'un dommage préexistant, effectuer une correspondance des couleurs et une double compression (JPEG) et ii) déterminer l'indication de la fraude sur la base de la détection d'au moins un d'un dommage préexistant, d'une correspondance des couleurs et d'une double compression JPEG.

10. Procédé automatisé de détection de fraude optique selon une des revendications 1 à 9, dans lequel le procédé automatisé comprend les étapes de mise à jour des paramètres d'apprentissage automatique (ML) du CNN après vérification humaine.

11. Détecteur de fraude optique automatisé (100) selon une des revendications 1 ou 2, **caractérisé en ce que** l'unité de localisation et de zone endommagée d'incident (130) comprend, pour le traitement des données reçues (1042/1043/1044) et la prédiction et/ou la détermination d'au moins des zones de localisation des dommages (1301) et/ou de la localisation géographique d'incident (1302) et/ou de la date d'incident (1303) et/ou de l'heure d'incident (1304), un appareil de reconnaissance pour l'identification automatisée des dommages aux véhicules ou aux biens sur la base du traitement d'images, comprenant une section de téléchargement montant de données de dommages, au moins une unité de stockage de données, une section de traitement d'images, une section d'identification des dommages et une section de sortie des informations sur les dommages,

dans lequel la section de téléchargement montant est conçue pour recevoir une ou plusieurs images capturées d'un dommage sur un véhicule ou un bien sous forme de données d'image numérique qui, lors d'une étape de chargement (1), sont téléchargées dans au moins une unité de stockage de données,

dans lequel la section de traitement d'images est conçue pour traiter les données d'image dans une étape de traitement d'image en appliquant indépendamment au moins deux structures de traitement de données de modélisation visuelle différentes (3 ; 4) aux données d'image afin d'identifier indépendamment les parties endommagées de l'automobile ou du bien et/ou les types de dommages sur l'automobile ou le bien et dans lequel chaque mode visuel fournit un sous-ensemble indépendant de données de dommages (3.5 ; 4.5) correspondant aux parties endommagées identifiées et/ou aux types de dommages identifiés,

dans lequel la section d'identification des dommages est conçue pour combiner automatiquement les sous-ensembles de données de dommages (3.5 ; 4.5) lors d'une étape de combinaison (5) afin de définir un domaine unique de données de dommages (6) qui offre une précision d'inférence accrue pour l'identification des parties endommagées de l'automobile ou du bien et/ou des types de dommages sur l'automobile ou le bien et

dans lequel la section de sortie d'identification des dommages est conçue pour fournir des informations sur les dommages basées sur le domaine unique de données de dommages (6).

12. Détecteur de fraude optique automatisé (100) selon la revendication 11, **caractérisé en ce que**, lors de l'étape de combinaison (5), les sous-ensembles individuels de données de dommages (3.5 ; 4.5) sont vérifiés afin de détecter d'éventuelles lacunes de données concernant les parties endommagées de l'automobile ou du bien et de telles lacunes de données dans un sous-ensemble de données de dommages (3.5) sont compensées par des données de dommages d'un autre sous-ensemble (4.5) afin d'améliorer la précision d'inférence du domaine unique de données de dommages (6).

13. Détecteur de fraude optique automatisé (100) selon une des revendications 11 ou 12, **caractérisé en ce qu'**une unité de stockage de données fournit une liste principale de nomenclature des dommages et que le domaine unique de données de dommages (6) représentant les parties endommagées identifiées et/ou les types de dommages identifiés est comparé à la liste principale de nomenclature des dommages afin d'associer le dommage identifié à la nomenclature de dommages correspondante.

14. Détecteur de fraude optique automatisé (100) selon une des revendications 11 à 13, **caractérisé en ce que**, lors de l'étape de traitement d'image, les données d'image sont traitées ultérieurement par un modèle d'arbre de décision à gradient boosté (7).

15. Détecteur de fraude optique automatisé (100) selon une des revendications 11 à 14, **caractérisé en ce que** les informations relatives aux dommages sont soumises à une validation par un expert humain et l'étape de combinaison (5) est augmentée d'un facteur de validation correspondant à la validation par l'expert.

16. Procédé automatisé de détection de fraude optique pour détecter une fraude dans une ou plusieurs images numériques associées à un sinistre automobile et à un transfert de risque associé, au moyen d'un système automatisé, selon une des revendications 3 à 10, le procédé comprenant, dans un premier temps, les étapes suivantes d'identification automatisée des dommages sur un véhicule ou un bien, basée sur le traitement d'images, dans lequel

une ou plusieurs images capturées d'un dommage sur un véhicule ou un bien fournissent des données d'image qui, lors d'une étape de téléchargement montant (1), sont téléchargées dans au moins une unité de stockage de données,

lors d'une étape de traitement d'images, les données d'image sont traitées en appliquant indépendamment au moins deux modèles visuels différents (3 ; 4) aux données d'image afin d'identifier indépendamment les parties endommagées de l'automobile ou du bien et/ou les types de dommages sur l'automobile ou le bien et dans lequel chaque modèle visuel (3 ; 4) fournit un sous-ensemble indépendant de données de dommages (3.5 ; 4.5) correspondant aux parties endommagées identifiées et/ou aux types de dommages identifiés,

lors d'une étape de combinaison (5), les sous-ensembles de données de dommages (3.5 ; 4.5) sont automatiquement combinés afin de définir un domaine unique de données de dommages (6) offrant une précision d'inférence accrue pour l'identification des parties endommagées de l'automobile ou du bien et/ou des types de dommages et

fournir des informations sur les dommages basées sur le domaine unique de données de dommages (6), qui indique les parties endommagées et/ou les types de dommages.

17. Procédé automatisé de détection de fraude optique selon la revendication 16, dans lequel, lors de l'étape de traitement d'image, les données d'image sont préparées pour le traitement par au moins deux modèles visuels différents (3 ; 4), en ce que les données d'image sont dotées d'un identifiant de cas, d'un numéro de pièce endommagée et/ou d'un identifiant d'image.

18. Procédé automatisé de détection de fraude optique selon la revendication 16 ou 17, dans lequel l'étape de traitement d'image d'au moins un des modèles visuels (3 ; 4) comprend les étapes d'identification des parties endommagées, d'identification de la classe de dommages et/ou d'attribution d'une mesure de confiance des dommages aux données de dommages.

19. Procédé automatisé de détection de fraude optique selon une quelconque des revendications 16 à 17 précédents, **caractérisé en ce que** l'étape de traitement d'image d'au moins un des modèles visuels (3 ; 4) comprend des étapes de nettoyage et/ou de correction des données, incluant la correction de la zone endommagée et/ou la classification des dommages.

20. Procédé automatisé de détection de fraude optique selon une quelconque des revendications précédentes 16 à 19, **caractérisé en ce que** l'étape de traitement d'image d'au moins un des modèles visuels (3 ; 4) comprend des étapes d'association des données de dommages à une nomenclature de dommages prédéfinie et/ou à une classification de dommages prédéfinie, dans lequel la nomenclature et/ou classification de dommages prédéfinie est sélectionnée dans une liste principale de nomenclatures de dommages.

21. Procédé automatisé de détection de fraude optique selon une quelconque des revendications précédentes 16 à 20, dans lequel, lors de l'étape de combinaison, le domaine unique de données de dommages (6) est traité par un modèle d'arbre de décision à gradient boosté (7) utilisant au moins deux modèles de classification à gradient boosté autonomes (7.1 ; 7.2 ; 7.3) fournissant des données de dommages pondérées et amalgamant les données de dommages pondérées pour fournir des informations sur les dommages en tant que sortie de modèle d'ensemble.

22. Procédé automatisé de détection de fraude optique selon une quelconque des revendications précédentes 16 à 21, dans lequel, lors de l'étape de combinaison (5), le domaine unique de données de dommages (6) et/ou la sortie de modèle d'ensemble sont soumis à une boucle de rétroaction (8) basée sur la validation par un expert humain et un facteur de validation correspondant à la validation par un expert est appliqué aux données de dommages.

23. Procédé automatisé de détection de fraude optique selon une quelconque des revendications précédentes 16 à 22, dans lequel au moins deux modèles visuels (3.5 ; 4.5) utilisés lors de l'étape de traitement d'image sont des modèles d'intelligence visuelle comme par exemple [veuillez lister au moins un exemple de modèle].

Fig. 1

EP 4 377 906 B1

Fig. 2

Fig. 3

Y/N

ML parameter updates

318

Fraud
Detection — Y/N —

320

Human
Verification — Yes —

324

Fraud
confirmed

No

No fraud
detected — 322

Fig. 3 cont'd

402

NLP based driver
text analytics
engine

Attributes 1

User submitted
image assesment
(AI based) and
damge zone
identification

404

Attributes 2

406

Car
overturn/hail
damage identification
(Zone 9:
roof)

No

Yes

Valid / Invalid
Zone 9

Attributes 3

414

Damage zone
and FCD
collection

Attributes 6

**Fig. 4**

Car and mobile sensor data

No ← Connected Automobiles ⟋—408

Floating cellular data (FCD) from mobile phone of driver ⟋—410

Yes

Data from On-Board Units (OBUs) sensors ⟋—412

Attributes 4

Attributes 5

Vehicle damage zone and location identification ⟋—416

Attributes 7

**Fig. 4 cont'd**

Fig. 4 cont'd

Fig. 5

EP 4 377 906 B1

600

Obtain obtain the automobile insurance claim, the automobile insurance claim comprising text data and one or more images associated with the automobile damage, automobile sensor data and mobile sensor data

602

Process the text data, the one or more images, and the automobile sensor data and the mobile sensor data to determine an unusual damage pattern and an indication of fraud

604

Determine a fraud in the automobile insurance claim based at least one of the unusual damage pattern and the indication of fraud

606

Fig. 6

**Fig. 7**

# Automobile claims fraud detector

Car and mobile sensor data

Car and mobile sensor data

Text information

Fetching of user uploaded text

Unusual pattern identification using business rules

Fig. 8b

Y/N

FNOL portal database

Textual information

Image retrieved from database for VI based fraud detection

Images (RGB values)

Visual Information

Fig. 8a

Images (RGB values)

ML parameter updates

CNN based pre-existing damage detector

Pre-existing damage confidence score
1: Detected
0: Not detected

RGB image input for fraud detection

RGB values floating point (MxNx3)

Parallel CNN based color matching

ML based fraud identifier

Y/N

Fraud Detection

Y/N

Human Verification

Yes

Color confidence score,
1: No Matching,
0: Match Found,

No

M: number of rows
N: number of columns

Double JPEG compression detection(DJCD) using custom CNN

DJCD confidence score,
1: D JPEG Detected,
0: Single JPEG.

No fraud detected

Fraud confirmed

Fig. 8c : ML based fraud detector

Fig. 8

EP 4 377 906 B1

45

Unusual pattern identification using business rules

Fig. 8b

**Unusual pattern idetnification using business rule**

Attributes 1

Attributes 6

Attributes 7

Damage Zone identification based on Attributes 1,6,7

Damage zone numbers and car overturn/hail damage flag 0/1

If car overturn/hail damage identification (Zone 9: roof) flag true

No
Damage zone numbers

Yes
Damage zone numbers

**Cognition rule based decision**

Rule 1: {(Zone1^Zone6)/(Zone1^Zone7)/(Zone1^Zone6^Zone7)}^Zone9
Rule 2: [(Zone2^Zone5)/(Zone2^Zone7)/(Zone2^Zone8)...
　　　/(Zone2^{(Zone5^Zone7)/(Zone5^Zone8)/(Zone7^Zone8)}...
　　　/(Zone2^Zone5^Zone7^Zone8)]^Zone9
Rule 3: [(Zone3^Zone4)/(Zone3^Zone6)/(Zone3^Zone8)...
　　　/(Zone3^{(Zone4^Zone6)/(Zone4^Zone8)/(Zone6^Zone8)}...
　　　/(Zone3^Zone4^Zone6^Zone8)]^Zone9
Rule 4: Zone4^Zone5^Zone9
Rule 5: Zone8^Zone10^Zone9
Rule 6: (Zone1/Zone2/Zone3/Zone4/Zone5/Zone6/Zone7/Zone8/Zone10)^Zone9
Rule 7: Zone1^Zone2^Zone3^Zone4^Zone5^Zone6^Zone7^Zone8^Zone9^Zone10 ,
Rule 8: Additional miscellaneous rules

^ :logical AND operation
/ :logical OR operation

**Cognition rule based decision**

Rule 1: (Zone1^Zone6)/(Zone1^Zone7)/(Zone1^Zone6^Zone7)
Rule 2: (Zone2^Zone5)/(Zone2^Zone7)/(Zone2^Zone8)...
　　　/(Zone2^{(Zone5^Zone7)/(Zone5^Zone8)/(Zone7^Zone8)}...
　　　/(Zone2^Zone5^Zone7^Zone8)
Rule 3: (Zone3^Zone4)/(Zone3^Zone6)/(Zone3^Zone8)...
　　　/(Zone3^{(Zone4^Zone6)/(Zone4^Zone8)/(Zone6^Zone8)}...
　　　/(Zone3^Zone4^Zone6^Zone8)
Rule 4: Zone4^Zone5
Rule 5: Zone8^Zone10
Rule 6: Zone1^Zone2^Zone3^Zone4^Zone5^Zone6^Zone7^Zone8^Zone10,
Rule 7: Additional miscellaneous rules

^ :logical AND operation
/ :logical OR operation

Rule flag true/false

Rule flag true/false

If any Rule (1 to 6) flag true

No

Yes

Unusual damage pattern not identified

Unusual damage pattern identified

**Fig. 8d**

Fetching of user uploaded images

Images stored in database

Image retrieved from database for VI based fraud detection

Pre-defined rules based approach for detection of unusual pattern of damage

Unusual pattern identified

Y/N

ML parameter updates

CNN (Pretrained ResNet 50) based corrosion detector

1: Corrosion, 0: No Corrosion

User filed a claim of car damage

Claim regiestered at portal

RGB image input for fraud detection

RGB values floating point (MxNx3)

M: number of rows
N: number of columns

Parallel CNN based Color matching

1: No Matching
0: Match Found

Logical OR

Fraud Detection

Y/N

Human Verification

Yes

No

No fraud detected

Fraud confirmed

Double JPEG compression detection using Custom CNN

1: D JPEG Detected,
0: Single JPEG

Fig. 9

48

1

Set of images
from a claim of
damaged vehicle

2

**Attributes:**
- case identifier
- part Number (default empty)
- Image Identifier
- Image Data (b64 encoded)

Data Preparation
+ Preprocessing
(base64 string
encoding)

**Attributes:**
- case identifier
- part Number (default empty)
- Image Identifier
- Image Data (b64 encoded)

3

Visual Intelligence
Model 1

4

Visual Intelligence
Model 2

Image
Strata
Response

**Attributes:**
- Part Identifier
- Damage Class
- Damage Confidence Metric

**Attributes:**
- Part Identifier
- Damage Class
- Damage Confidence Metric

Claim
Strata
Response

3.1

Data Cleaning
/ Correction
Operations

4.1

Data Cleaning
/ Correction
Operations

**Attributes:**
- Part Identifier - Model 1 Specific
- Damage Class - Corrected
- Damage Confidence Metric

**Attributes:**
- Part Identifier - Model 2 Specific
- Damage Class - Corrected
- Damage Confidence Metric

3.2

Supplementary
Data Post-
Processing +
Vendor 1 JSON
Payload
Validation

4.2

Supplementary
Data Post-
Processing +
Vendor 3 JSON
Payload
Validation

**Attributes:**
- Part Identifier - Model 1 Specific
- Damage Class - Corrected
- Damage Confidence Metric

**Attributes (Claim Level):**
- Part Identifier - Model 1 Specific
- Damage Class - Corrected
- Damage Confidence Metric

3.3

Model 1 Entity
Nomenclature
Mapping

4.3

Model 2 Entity
Nomenclature
Mapping

**Attributes:**
- Part Identifier - Swiss Re Internal Nomenclature
- Damage Class - Swiss Re Internal Nomenclature
- Damage Confidence Metric

**Attributes (Claim Level):**
- Part Identifier - Swiss Re Internal Nomenclature
- Damage Class - Swiss Re Internal Nomenclature
- Damage Confidence Metric

3.4

Claim Level Result
Aggregation of
Damaged Parts +
Types using
Boolean
Arithmetic

4.5

**Attributes (Claim Level):**
- Part Identifier - Swiss Re Internal Nomenclature
- Damage Class - Swiss Re Internal Nomenclature
- Damage Confidence Metric

3.5

5

Combine parts into
common
Nomenclature using
master list

6

Fig. 10

Fig. 11

Fig. 12

Fig. 13

Fig. 14

Fig. 15

Fig. 16

Fig. 17

**EP 4 377 906 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018055340 A1
- CN 105405054 A
- US 11005872 B2
- US 20180182039 A1
- US 20210192455 A1
- US 20200364802 A1

**Non-patent literature cited in the description**

- **SINGH R**. *Automatic Car Insurance Claims Using Deep Learning Techniques*
- **PEI LI**. *An Anti-fraud System for Car Insurance Claim Based on Visual Evidence*
- **JAN KAMENICKY**. *PIZZARO: Forensic analysis and restoration of image and video data*